# FASCICULE DE BREVET EUROPEEN

(11) **EP 3 328 732 B1**
(45) Date de publication et mention de la délivrance du brevet: **04.09.2019**
(21) Numéro de dépôt: 16748339.5
(22) Date de dépôt: 18.07.2016
(51) Int. Cl.: B64C 27/30, B64C 27/32

(54) **ROTOR DE SUSTENTATION ET AERODYNE HYBRIDE A DECOLLAGE ET/OU ATTERRISSAGE VERTICAL OU COURT LE COMPORTANT**
AUFTRIEBSROTOR UND HYBRIDLUFTFAHRZEUG MIT VERTIKALEM ODER KURZEM START UND/ODER LANDUNG
LIFT ROTOR AND VERTICAL OR SHORT TAKE-OFF AND/OR LANDING HYBRID AIRCRAFT COMPRISING THE SAME

(30) Priorité: 31.07.2015 FR 1557364
(43) Date de publication de la demande: 06.06.2018
(73) Titulaire: Innostar, 92320 Chatillon (FR)
(72) Inventeur: SIMON, Jean-Michel, 92320 Chatillon (FR)
(74) Mandataire: Lavialle, Bruno François Stéphane
(86) Numéro de dépôt international: PCT/FR2016/051835
(87) Numéro de publication internationale: WO 2017/021608

(56) Documents cités:
- US-A- 2 471 687
- US-A- 2 475 318
- US-A- 2 949 254
- US-A- 3 074 487
- US-A- 3 693 910
- US-B1- 6 619 585

## Description

L'invention concerne un rotor ou système rotor de sustentation, pour un aérodyne hybride à décollage et/ou atterrissage vertical ou court, permettant à l'aérodyne de décoller et/ou d'atterrir verticalement ou sur de courtes distances, puis de se mouvoir horizontalement à grande vitesse, l'aérodyne hybride étant du type équipé d'une voilure fixe et d'une voilure tournante, apte à être immobilisée en vol de croisière.

L'invention s'applique en particulier à de petits aérodynes d'une envergure relativement faible (par exemple : 4m) évoluant à une vitesse relativement élevée (par exemple : 350 km/h) et destinés à des missions de surveillance côtière, ou bien à des surveillances de voies ferrées ou routières sur de longues distances, ou encore à des transports d'assistance/évacuation médicale sur de longues distances dans des zones relativement inhabitées, les aérodynes étant capables de décoller de n'importe quel endroit sans nécessiter particulièrement d'avoir une piste de décollage ou une infrastructure particulière. Typiquement, il peut s'agir d'un aérodyne de type ULM (ou LSA) équipé par exemple d'un rotor de 3m de diamètre avec une motorisation de 150KW capable d'évoluer à une vitesse de croisière d'environ 350 km/h et de franchir une distance de l'ordre de 1000 km. Pour réussir cette performance, il faut que le rotor ou système rotor objet de la présente invention soit performant en sustentation, mais aussi qu'il ne génère pas de traînée trop importante en déplacement horizontal à grande vitesse de l'aérodyne. Pour cela, l'invention propose d'utiliser, d'une part, un rotor ou système rotor constitué principalement par au moins deux mono pales tournant de façon contrarotative (en sens inverse l'une de l'autre) et, d'autre part, d'offrir des moyens d'arrêter la rotation desdites mono pales pendant le vol de croisière et de les maintenir en position en toute sécurité avec une trainée aérodynamique minimale.

L'idée d'utiliser une ou des mono pales dans des concepts de « stop rotor » hybrides VTOL (acronyme anglo saxon pour décollage et atterrissage vertical) est une idée très ancienne. Elle est dans le domaine public. En effet, une mono pale présente, de façon évidente, un intérêt vis-à-vis de la traînée du rotor quand la rotation de celui-ci est arrêtée. C'est aussi une bonne solution quand on veut concevoir un système où le rotor est caché (mis à l'abri du vent relatif) pendant le vol à vitesse élevée. Par exemple, dans ce domaine, on peut relever au niveau des brevets :
- Aldi (1970/ US3693910)
- Burrel (1975/ US3884431)
- Bolonkin (2001/ US6234422)
- Capanna (2002/ US6340133)
- Hong (2009/ US8376264)

Tous ces inventeurs, ainsi que d'autres non cités, ont envisagé d'utiliser des rotors équipés de mono pales avec ou sans contrepoids pendant les décollages et atterrissages, puis de les stocker horizontalement et/ou de les dissimuler dans la structure de l'aérodyne de façon à ce qu'ils ne créent pas un frein aérodynamique trop important, quand l'aérodyne est en situation de vol horizontal à grande vitesse, c'est-à-dire à vitesse suffisamment élevée pour que la sustentation et la manoeuvrabilité de l'aérodyne soient assurées par sa voilure fixe et les dérives et gouvernails de direction et profondeur qui lui sont associées de manière bien connue.

De plus, les brevets US 2 471 687, US 2 475 318, US 2 949 254, US 3 074 487 et US 6 619 585 décrivent des rotors mono pale avec contrepoids d'équilibrage pour hélicoptères.

Aucun de ces systèmes n'a réellement été développé et commercialisé.

De l'avis de la Demanderesse, les raisons qui ont conduit à l'échec de ces systèmes, et qui font mieux comprendre l'intérêt de la présente invention, sont les suivantes :
- dans le cas où le rotor doit être caché, cela conduit, d'une part, à des mécanismes trop complexes, et, d'autre part, à des situations d'instabilité aérodynamique du rotor au moment où il est mis à l'abri, après le décollage et la transition en vol de croisière, et au moment où il est découvert pour l'atterrissage,
- dans le cas où le rotor n'est pas caché et laissé libre dans le flux d'air (ou vent relatif) en vol de croisière, si la charge rotorique (en N/m2) est correcte de façon à avoir une puissance de décollage raisonnable, cela suppose un diamètre du rotor important, et, par conséquent, une longueur de pale assez grande qui conduit à des instabilités au moment de l'arrêt et/ou de la remise en rotation du rotor, quand le rotor perd l'effet stabilisateur de la force centrifuge. En effet, les pales d'un rotor, pour être efficaces aérodynamiquement, doivent être relativement fines et donc relativement souples, et présenter de bonnes performances d'aéroélasticité, telles que celles des pales de rotors d'hélicoptères modernes.

- Dans le cas où la charge rotorique est forte, les pales sont plus courtes et plus rigides, donc plus stables, mais la puissance nécessaire pour assurer la sustentation est très élevée, ce qui nuit à l'intérêt du concept. Il est aussi possible de multiplier les rotors avec des pales de longueur faible et rigides, mais la complexité des transmissions de puissance rend alors ce concept peu compétitif.
- Enfin, il est possible d'utiliser deux mono pales tournant en sens inverse de façon contrarotative. Par exemple, les hélicoptères de type KAMOV, utilisent des rotors contrarotatifs. En dépit des avantages offerts par ce type de concept contrarotatif, la complexité de la maîtrise simultanée du pas collectif et du pas cyclique sur deux niveaux, le long de l'axe du rotor, pour un rotor contrarotatif fait que cette conception, mécaniquement très complexe et fragile, est peu répandue.

L'invention proposée par la demanderesse résout ces contradictions, et permet de proposer une conception globale du rotor ou système rotor qui peut être à la fois efficace en portance pendant un vol stabilisé, mais aussi permettre d'être arrêté puis remis en rotation en toute sécurité pendant ou après un vol de croisière à grand vitesse.

Les principales caractéristiques du rotor proposé selon l'invention sont :
- un rotor constitué d'au moins deux mono pales équipées chacune d'un contrepoids et tournant de façon contrarotative, autour d'un même axe ou chacune autour de l'un respectivement d'au moins deux axes décalés sur l'axe de roulis de l'aérodyne. Les pales, les contrepoids et les bras porteurs des contrepoids sont profilés de façon aérodynamique pour offrir un minimum de résistance à l'avancement pendant le vol de croisière.
- La partie active de la pale (celle qui présente un profil aérodynamique et produit la portance) a une longueur réduite par rapport au rayon du rotor ; elle parcourt une surface annulaire, en périphérie du disque rotor, qui permet, d'une part, d'utiliser la partie la plus efficace de la pale pour la portance, et, d'autre part, de limiter la flexion de la pale (qui varie comme le cube de sa longueur), et donc de limiter les instabilités au moment de l'arrêt ou de la remise en rotation du rotor.
- Une variation de pas collective : le pas des pales peut être changé uniquement de façon collective, de façon à simplifier grandement le mécanisme d'ajustement du pas. L'absence de variations cycliques du pas est compensée par la présence, par exemple aux extrémités du fuselage et/ou des ailes de la voilure fixe de l'aérodyne, de soufflantes d'attitude qui permettent de corriger le roulis et le tangage de l'aérodyne.
   De façon à avoir ce qu'on appelle « une figure de mérite » (FOM en anglais) acceptable, il faut avoir : une bonne charge rotor (<450N/m2), c'est-à-dire une surface du disque rotor assez grande en regard de la masse totale de l'aérodyne.
- Pour fixer rigidement les mono pales pendant la croisière à haute vitesse, il faut avoir une partie rigide (bras du contrepoids + partie portant la partie active de la pale) fixée rigidement sur le mât rotor.
- Les mono pales évoluent de façon contrarotative à partir d'une position initiale "zéro", sensiblement dans l'axe de roulis de l'aérodyne (contrepoids vers l'avant et pale active vers l'arrière par rapport au sens de déplacement de l'aérodyne en vol de croisière). Les forces centrifuges de chaque pale sont équilibrées par le contrepoids correspondant de façon à ne pas créer de vibrations dans le mât rotor.
- Les mono pales doivent être articulées avec une articulation à balancier de très faible raideur, au niveau du mât rotor, pour ne pas générer de couple alternatif sur le mât rotor pendant la rotation des mono pales. Mais quand le rotor est à l'arrêt, par exemple pendant le vol de croisière, cette articulation de raideur très faible doit être verrouillée pour fixer solidement les mono pales en position "horizontale" (alignée sensiblement sur l'axe de roulis de l'aérodyne).
- Les mono pales présentent dans leur partie centrale, au niveau des parties dites rigides, des profils aérodynamiques dissymétriques, qui permettent de faciliter grandement le redémarrage (ou remise en rotation) du rotor en vol, et de « soulager » la puissance motrice appliquée sur le rotor par un entraînement « naturel » lié aux forces du « vent relatif » sur le rotor, pendant le déplacement (horizontal) de l'aérodyne en vol de croisière.

A cet effet, l'invention a pour objet un rotor pour aérodyne hybride, à voilure fixe et à voilure tournante apte à être immobilisée en vol de croisière de l'aérodyne, le rotor étant apte à produire de la portance par sa rotation en phase de vol vertical et à être immobilisé et stocké longitudinalement en phase de vol de croisière, du type comportant au moins une mono pale avec contrepoids, ladite mono pale comprenant:
- une pale active qui génère la portance du rotor pendant sa rotation ;
- une première partie qui porte ladite pale active et constitue la liaison de la pale active à un mât rotor ; et
- une deuxième partie qui porte ledit contrepoids et constitue la liaison du contrepoids audit mât rotor,
- la longueur de la pale active selon son envergure étant inférieure au rayon R du rotor ;
- ladite partie porteuse de la pale active étant une partie structurellement rigide, en particulier vis-à-vis de la flexion et de la torsion ;
- ladite partie porteuse de la pale active présentant une section transversale à profil aérodynamique ayant une portance nulle ou quasi nulle quand le rotor est en rotation ; et
- l'ensemble constitué par la pale active et la partie rigide porteuse de la pale active étant articulé autour d'un axe transversal perpendiculaire à l'axe de rotation du rotor, sensiblement au niveau dudit axe de rotation du mât rotor, et à l'axe longitudinal de ladite pale active et de ladite partie rigide porteuse de la pale active, et sécant avec ledit axe de rotation, caractérisé en ce que le rotor comprend au moins deux mono pales sensiblement identiques et tournant en sens inverses, chacune autour de l'un respectivement d'axes de rotation espacés longitudinalement sur l'axe de roulis de l'aérodyne, ou contrarotatives autour d'un même axe de rotation du mât rotor, et en ce que, pendant le vol de croisière, chaque mono pale est arrêtée et verrouillée longitudinalement de façon à ce que le contrepoids soit orienté vers l'avant de l'aérodyne et la pale active vers l'arrière de l'aérodyne, sensiblement dans la direction de l'axe de roulis de l'aérodyne et que pendant un vol vertical, les au moins deux mono pales tournent en sens inverse à la même vitesse angulaire, à partir d'une position zéro initiale, qui est ladite position arrêtée longitudinalement.

Avantageusement, le rotor (ou système rotor) selon l'invention comprend également l'une au moins des caractéristiques suivantes :
- la longueur de la pale active, selon son axe longitudinal, est inférieure à 75 % du rayon R du rotor et, de préférence, comprise entre 50 % et 70 % du rayon R ;
- ladite partie porteuse du contrepoids est sensiblement analogue à la partie porteuse de la pale active en ce qu'elle est structurellement rigide et de section transversale à profil aérodynamique ayant une portance nulle ou quasi nulle quand le rotor est en rotation ;
- la longueur selon de la partie rigide porteuse du contrepoids, selon l'axe longitudinal de la pale active, est sensiblement égale à la longueur de la partie rigide porteuse de la pale active ;
- la partie porteuse du contrepoids et la partie porteuse de la pale active forment une seule et même structure continue et rigide articulée à pivotement autour dudit axe transversal, au niveau dudit axe de rotation du rotor ;
- la partie porteuse du contrepoids est entraînée en rotation comme la partie porteuse de la pale active mais reste fixée perpendiculairement à l'axe de rotation du rotor pendant toutes les phases de vol de l'aérodyne ;
- le contrepoids conserve un degré de mobilité longitudinale qui est piloté par un dispositif d'équilibrage proportionnellement à l'angle de conicité que fait la pale active avec le plan dit "horizontal" défini par les axes de roulis et tangage de l'aérodyne, de façon à rapprocher le contrepoids du mât rotor quand l'angle de conicité de la pale augmente, de sorte à équilibrer les efforts centrifuges de part et d'autre du mât rotor ;
- les deux parties rigides porteuses, l'une de la pale active et l'autre du contrepoids, sont solidaires l'une de l'autre et formées en une seule structure à la fois rigide et profilée aérodynamiquement pour ne pas générer de portance aérodynamique en rotation, tout en étant articulées autour d'un axe transversal situé exactement au niveau de l'axe de rotation du rotor ;
- un dispositif d'équilibrage mécanique est, au moins en partie, agencé à l'intérieur de la partie rigide porteuse du contrepoids, de façon à rapprocher ledit contrepoids de l'axe de rotation du rotor, quand l'angle de conicité que fait la pale active avec le plan dit "horizontal" augmente, de façon à équilibrer les forces centrifuges quelle que soit la position de la pale active ;
- le rotor est entraîné en rotation par un dispositif d'entraînement masqué à l'intérieur de la partie rigide porteuse du contrepoids, ledit dispositif d'entraînement autorisant des mouvements de traînée en rotation autour de l'axe de rotation du rotor, pour amortir les variations des forces de traînée de la pale active, ledit dispositif d'entraînement comportant un système de butée d'entraînement amortie ;
- le pas angulaire ou « angle d'attaque » de la pale active est piloté en incidence par un système d'arbre longitudinal, retenu et monté rotatif sur lui-même autour de son axe par des roulements et butées, ledit arbre traversant la partie rigide porteuse de la pale active et étant solidaire en rotation, par son extrémité radiale externe par rapport à l'axe de rotation du rotor, du pied de ladite pale active, et piloté par une biellette de commande de pas reliée par un levier de pas à l'extrémité radiale interne dudit arbre ;
- le pas angulaire ou "angle d'attaque" de la pale active est fixe et optimisé pour offrir la portance maximale à la vitesse de rotation nominale du rotor ;
- le pas des pales actives des mono pales est réglé uniquement collectivement, pour l'équipement d'un aérodyne dont les mouvements de roulis et de tangage sont pilotés par des systèmes de stabilisation placés, de préférence, en bout d'ailes et/ou aux extrémités du fuselage ;
- une chaîne d'entraînement motorisée et de mise en rotation du rotor à la fin d'un vol de croisière comporte, d'une part, un moteur principal thermique, du type moteur à combustion interne à 4 ou 2 temps ou turbine à gaz, entraînant un arbre de transmission de la puissance motrice, par l'intermédiaire d'un embrayage et d'une roue libre, et une boîte de transmission reliée au mât rotor pour assurer le vol vertical, et, d'autre part, un frein sur l'arbre de transmission de puissance, un moteur secondaire, de préférence électrique, couplé par un embrayage et une roue libre à une transmission de puissance en prise avec l'arbre de transmission, en aval du frein, pour arrêter et positionner longitudinalement les mono pales du rotor et servir à la mise en rotation du rotor ;
- une chaîne d'entraînement motorisée secondaire, de faible puissance, par exemple de 10 % de la puissance principale, comprend un moteur auxiliaire raccordable, par au moins un embrayage et une roue libre, audit arbre de transmission de puissance, et est débrayable et apte à être utilisée dans toutes les phases transitoires de vol ainsi qu'en situation d'avarie du moteur principal, une hélice propulsive ou tractive étant apte à être entraînée en vol de croisière par le moteur principal et, en secours, par le moteur auxiliaire ;
- lesdites parties rigides porteuses respectivement de la pale active et du contrepoids sont, au moins pour l'une d'entre elles, et de préférence pour les deux, profilées de façon à offrir une résistance aérodynamique différente selon l'orientation du vent relatif, avec un profil de type elliptique sur le bord d'attaque et, de préférence, un profil « en creux » sur le bord de fuite, chaque profil ayant une orientation inverse de l'autre, et inverse d'une partie rigide à l'autre, de façon à ce que, quand l'aérodyne est en vol de croisière, le vent relatif produise sur les deux parties rigides un couple d'entraînement du rotor qui tend à faire tourner la pale active dans le sens qui lui permet de générer de la portance ;
- au moins un élément de verrouillage mécanique, rétractile, et apte à être masqué dans la structure de l'aérodyne, est agencé de façon à venir verrouiller mécaniquement, pendant un vol de croisière, le rotor en venant s'appuyer sur au moins une protubérance agencée sur la partie rigide porteuse d'une pale active et/ou sur le contrepoids correspondant ou la partie rigide porteuse dudit contrepoids ;

- au moins un dispositif de verrouillage mécanique de la partie rigide porteuse de la pale active est prévu, ledit dispositif de verrouillage étant solidaire, d'une part, du mât rotor et, d'autre part, comportant un élément de verrouillage engageable dans une partie femelle solidaire de la partie rigide porteuse de la pale active, et supportant une masselotte en étant sollicité par au moins un ressort, le dispositif étant agencé de telle sorte que la force centrifuge, qui s'exerce sur la masselotte, quand le rotor est en rotation, libère le dispositif de verrouillage, qui verrouille la pale en position horizontale quand le rotor est à l'arrêt ;
- ledit contrepoids est placé à l'extrémité d'un élément prolongateur de la partie rigide porteuse du contrepoids, ledit élément prolongateur ayant un profil soit cylindrique et sensiblement circulaire, soit ayant un profil ovale orienté pour réduire la résistance aérodynamique quand le rotor est en rotation et qu'un flux d'air vertical important est généré par la pale active, soit étant entouré d'un carénage profilé aérodynamiquement et libre en rotation de façon à s'orienter pour réduire la résistance aérodynamique quelle que soit la direction du flux d'air ;
- l'entraînement du rotor en rotation pendant le vol vertical est obtenu en éjectant de l'air comprimé, de préférence au niveau du contrepoids, avantageusement porté par un élément prolongateur de la partie rigide porteuse du contrepoids, la distance r qui sépare le point moyen d'éjection de l'air à l'axe rotor étant telle que le rapport r/R soit compris entre 55 % et 85 %, R étant le rayon du rotor, et/ou au niveau du bout de la pale active ;

- une boîte mécanique de synchronisation et de redémarrage du rotor est associée à un frein et à au moins un moteur électrique avec son système de transmission ;
- le bout de la pale active est équipé d'un dispositif d'orientation à dérive relevable par pivotement autour de l'axe longitudinal de la pale active, tel que, quand le rotor n'est plus entraîné en rotation, ladite dérive est relevée et soumise à l'effet du vent relatif, de sorte que la mono pale correspondante est orientée sensiblement dans la direction de l'axe de roulis de l'aérodyne ;
- au moins une mono pale comporte deux pales actives portées par la même partie rigide et écartées l'une de l'autre en V d'un angle au moins égal à 30°, sensiblement dans le plan du disque rotor correspondant.

L'invention a également pour objet un aérodyne du type hybride, tel que défini ci-dessus, caractérisé en ce qu'il est équipé d'un rotor selon l'une ou plusieurs des caractéristiques précitées, pour le vol vertical, et d'une voilure fixe, de préférence une voilure de type « canard » ou des ailes de type « tandem », supportée par un fuselage, et équipé de systèmes de stabilisation en bout d'ailes et/ou en extrémité(s) de fuselage, pour contrôler les mouvements de roulis et de tangage de l'aérodyne, ainsi qu'au moins une hélice, de préférence propulsive, pour propulser l'aérodyne pendant son vol de croisière.

Avantageusement, les systèmes de stabilisation en bout d'ailes et/ou en extrémité de fuselage pour contrôler les mouvements de roulis et de tangage de l'aérodyne, sont réalisés sensiblement de la même façon que le rotor principal de sustentation en vol vertical, mais à une échelle plus petite, correspondant à la fonction desdits systèmes de stabilisation, et avec au moins une mono pale avec contrepoids.

L'invention sera mieux comprise, et d'autres caractéristiques et avantages de l'invention ressortiront, de la description donnée, à titre non limitatif, d'exemples de réalisation décrits ci-dessous en référence aux dessins annexés sur lesquels :
- les figures 1a et 1b sont des vues schématiques en plan d'un premier exemple d'aérodyne selon l'invention en phase, respectivement, de vol vertical et de vol de croisière ;
- les figures 2a et 2b sont des vues schématiques d'un premier exemple de mono pale pour rotor selon l'invention respectivement en élévation latérale et en plan ;
- les figures 3a et 3b sont des vues respectivement analogues aux figures 2a et 2b pour un second exemple de rotor selon l'invention, avec deux mono pales contrarotatives autour d'un même axe de rotation ;
- la figure 4 est une vue schématique de dessus du rotor selon les figures 2a et 2b et du disque rotor correspondant ;
- les figures 5a et 5b sont des vues schématiques en élévation latérale de comparaison d'un rotor classique d'hélicoptère et d'un rotor selon l'invention, respectivement ;
- les figures 6a, 6b et 6c sont des vues schématiques de dessus pour les deux premières et une vue de face pour la troisième d'un rotor selon l'invention tel que celui des figures 3a et 3b, respectivement à l'arrêt pendant un vol de croisière (fig. 6a) et en rotation pendant un vol vertical, pour les figures 6b et 6c ;
- la figure 7a est une vue analogue à la figure 6c pour un second exemple de rotor selon l'invention à deux mono pales contrarotatives et coaxiales ;
- la figure 7b est une vue schématique partielle, en élévation latérale, d'un dispositif d'équilibrage des forces centrifuges pour chacune des mono pales d'un rotor selon la figure 7a ;
- les figures 8a, 8b et 8c sont des vues schématiques en plan, avec coupe partielle pour la figure 8c, d'une mono pale de rotor selon l'invention, avec son dispositif d'entraînement de la mono pale, un amortisseur de traînée, et un dispositif de commande du pas de la pale active correspondante sur la figure 8c ;
- la figure 9 est une vue très schématique, en partie en élévation latérale et en partie en coupe par un plan passant par l'axe du mât rotor, de la chaîne cinématique d'entraînement d'un rotor à deux mono pales contrarotatives et coaxiales, et représentant le système de motricité, d'arrêt et de remise en rotation des deux mono pales contrarotatives, le système de commande de pas collectif de leurs pales actives, ainsi que le système d'entraînement d'une hélice propulsive ou tractive de l'aérodyne ;
- la figure 10 est une vue schématique en plan analogue à la figure 2b d'un autre exemple de mono pale de rotor selon l'invention, à profil aérodynamique adapté pour faciliter la mise en rotation du rotor pendant une phase de transition entre un vol de croisière et un vol vertical ;
- les figures 11a, 11b et 11c sont des vues schématiques, respectivement de profil, de face et de dessus, d'un rotor à deux mono pales selon l'invention avec son système de verrouillage mécanique pendant un vol de croisière ;
- les figures 12a et 12b sont respectivement une vue schématique partielle de dessus et une vue schématique de détail d'un exemple de dispositif mécanique de verrouillage d'une mono pale en position "horizontale" ou de repos, quand le rotor est à l'arrêt, et qui se libère quand le rotor est en rotation ;
- la figure 13 est une vue schématique en élévation latérale d'un rotor selon l'invention à deux mono pales contrarotatives et coaxiales, représentant un dispositif de verrouillage mécanique alternatif ou complémentaire à celui des figures 11a, 11b et 11c pour verrouiller le rotor pendant un vol de croisière ;
- la figure 14 est une vue schématique de dessus d'un autre exemple de mono pale de rotor selon l'invention, avec un prolongateur porteur du contrepoids et une forme ainsi qu'une orientation du contrepoids qui sont adaptées pour réduire la traînée et ne pas perturber le flux d'air pendant un vol vertical ;
- les figures 15a et 15b sont des vues schématiques respectivement en plan et en élévation latérale d'encore un autre exemple de mono pale de rotor selon l'invention, équipé d'un système d'entraînement du rotor par génération d'air comprimé et expulsion de l'air comprimé au niveau du contrepoids porté par un prolongateur tel que représenté sur la figure 14, avec, éventuellement, expulsion de l'air comprimé également en bout de pale active ;
- les figures 16a et 16b sont des vues analogues respectivement aux figures 1a et 1b pour un autre exemple d'aérodyne selon l'invention équipé d'un système rotor à deux mono pales contrarotatives, entraînées chacune autour de l'un respectivement de deux axes de rotation espacés sur l'axe de roulis de l'aérodyne ;
- les figures 17a, 17b, 17c et 17d sont des vues schématiques respectivement en plan, et en coupe transversale, en rotation et à l'arrêt de l'entraînement d'une mono pale du rotor, d'un dispositif d'extrémité de la pale active correspondante du rotor selon l'invention, et tel que, lorsqu'elle n'est plus entraînée en rotation, la mono pale s'aligne automatiquement dans la direction sensiblement de l'axe de roulis de l'aérodyne, dans le sens contraire au sens de déplacement de ce dernier ; et
- la figure 18 est une vue schématique en plan d'encore un autre exemple de rotor selon l'invention avec une mono pale à deux pales actives en V.

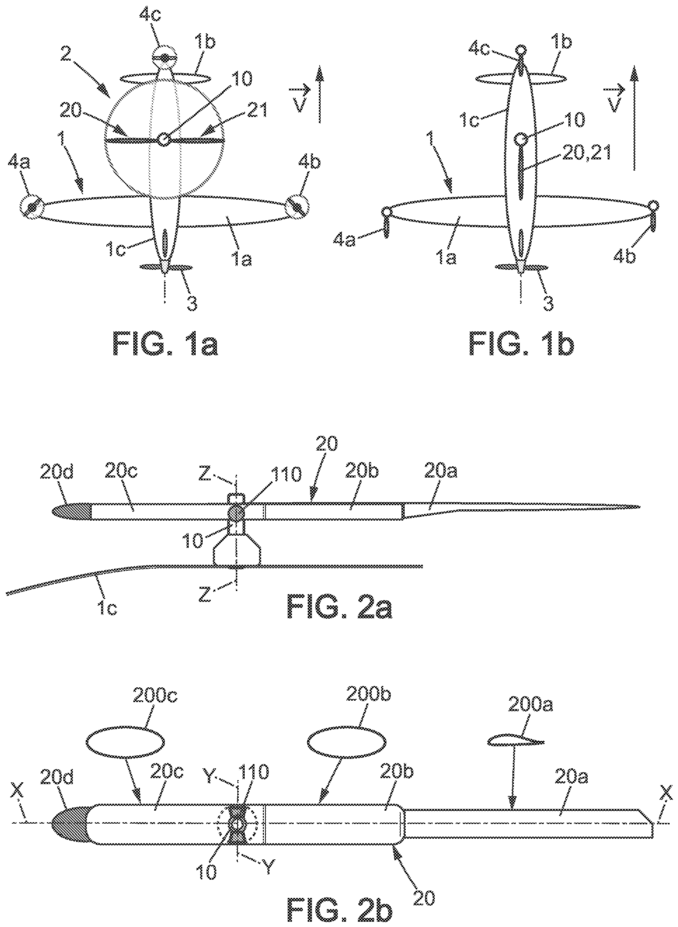

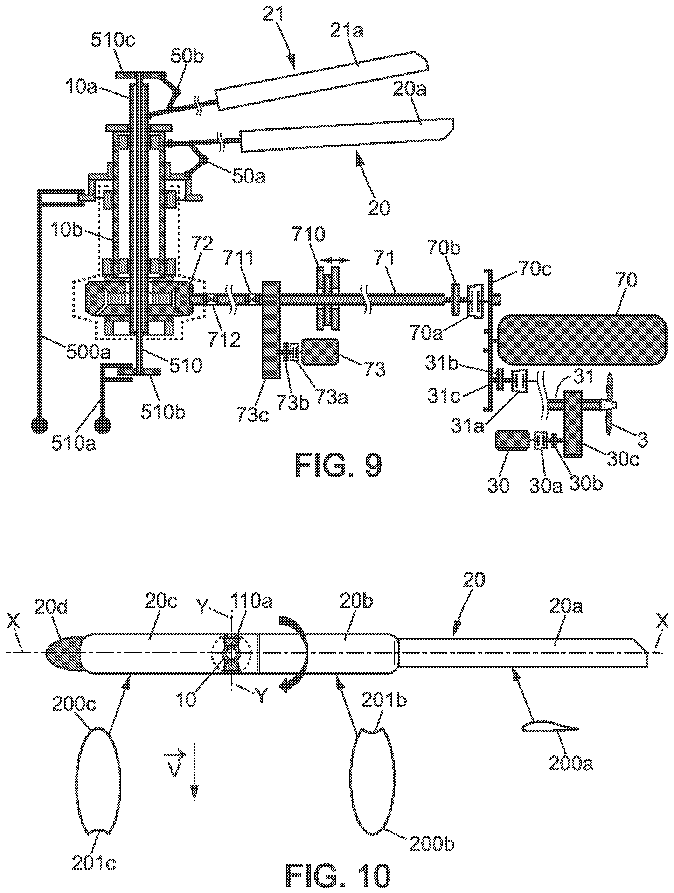

Dans toute la description qui suit, les mêmes références numériques ou alphanumériques sont utilisées pour désigner des éléments identiques ou analogues dans les différents exemples de réalisation représentés sur les figures, et, sauf dans la partie de la description en référence, aux figures 1a, 1b, 9, 16a et 16b, le dispositif décrit est uniquement le système rotor de l'aérodyne qui assure la sustentation verticale. Sauf en référence à la figure 9, on ne décrit pas de manière détaillée, en particulier la motorisation, ni la transmission de puissance de la motorisation à la ou aux hélices, ni le fuselage porteur des passagers et/ou d'une cargaison.

Dans toutes les figures représentant une ou les mono pale(s) verrouillée(s) à l'arrêt, en vol "horizontal" de croisière, l'axe X longitudinal d'une mono pale est un axe parallèle à l'axe de roulis, ou ce dernier, orienté vers l'avant de l'aérodyne, donc dans le sens de déplacement de l'aérodyne en vol horizontal, et, plus généralement, en dehors des phases de décollage et d'atterrissage vertical, l'axe X s'étend dans la direction longitudinale de l'aérodyne, tandis que l'axe transversal Y d'articulation de la ou des mono pales est un axe parallèle à l'axe de tangage ou ce dernier, qui est transversal par rapport à l'axe longitudinal et perpendiculaire à ce dernier, en étant lui-même généralement horizontal en configuration de vol stabilisé de l'aérodyne, et l'axe Z est l'axe ou un axe de rotation du système rotor, et parallèle à l'axe de lacet, ou est l'axe de lacet, perpendiculaire au plan défini par les axes X et Y, et donc normalement vertical, en configuration de vol stabilisé de l'aérodyne.

Les figures 1a et 1b montrent deux vues en plan, respectivement en vol vertical et en vol "horizontal" ou de croisière, d'un premier exemple d'aérodyne, qui est équipé d'un rotor de sustentation selon l'invention. Il s'agit, dans cette configuration (mais pas nécessairement uniquement), d'un aérodyne 1 de type « canard » avec une voilure fixe comprenant des ailes principales arrière la et une voilure canard 1b à l'avant du fuselage 1c, et équipé de soufflantes d'attitude 4a, 4b au bout des ailes la à l'arrière de l'aérodyne, ainsi que d'une soufflante 4c à l'extrémité avant du fuselage 1c, devant la voilure canard 1b pour maîtriser le roulis et le tangage de l'aérodyne 1. Le rotor 2 selon l'invention permet à cet aérodyne 1 de décoller verticalement (Fig. 1a) puis, après arrêt et verrouillage dudit rotor 2 en position horizontale, en alignement avec l'axe de roulis, d'évoluer à une vitesse de croisière importante V (Fig. 1b) en étant propulsé par une hélice (3) propulsive. En fin de croisière, quand l'aérodyne 1 ralentit, le rotor 2 est relancé en rotation et l'aérodyne 1 atterrit verticalement.

Les éléments constitutifs de la figure 1 sont, d'une part, le rotor 2 qui permet à l'avion de s'élever ou descendre verticalement, et, d'autre part, le fuselage 1c de l'avion (1) avec l'aile arrière 1a, l'aile canard avant 1b, et une hélice propulsive (3). Enfin, l'avion 1 comporte des éléments de stabilisation 4a, 4b et 4c, à chaque extrémité de l'aile arrière 1b et à l'extrémité avant du fuselage 1c. Sur cette représentation, les éléments stabilisateurs sont, de préférence, des rotors électriques qui ensuite, pendant le vol, sont soit arrêtés dans une position de traînée minimale, soit dissimulés dans la structure (ailes la ou fuselage 1c).

De façon alternative, les systèmes de stabilisation 4a, 4b, 4b peuvent être aussi organisés à partir de jets d'air primaire comprimé, prélevé à la sortie des étages de compression d'un compresseur ou d'une turbine à gaz, telle que celle pouvant entraîner l'hélice 3.

Les figures 2a et 2b représentent une réalisation préférée de rotor mono pale selon l'invention. Les figures 2a et 2b sont respectivement une vue de profil du rotor arrêté pendant le vol de croisière, et une vue de dessus du rotor arrêté. Il s'agit d'un rotor constitué d'une mono pale 20, qui comporte un contrepoids 20d qui équilibre les forces centrifuges créées par la mono pale elle-même. L'ensemble mono pale 20 est constitué principalement de trois parties 20a, 20b et 20c, et du contrepoids 20d.
- la pale active 20a elle-même, qui a un profil d'aile 200a classique assure l'essentiel de la portance. Sa longueur effective, selon son envergure et son axe longitudinal, est considérablement réduite par rapport à ce qu'elle serait dans le cas d'un rotor classique. Ici, sa longueur est inférieure à 75 % de la longueur du rayon du rotor et, de préférence, comprise entre 50 % et 70 % du rayon du rotor. Cette réduction de la longueur de la pale active 20a est particulièrement importante pour la stabilité en vol et pendant l'arrêt et le redémarrage (remise en rotation) du rotor, car elle permet, d'une part, de réaliser une structure de pale rigide en flexion et en torsion tout en ayant un profil d'aile 200a pour la pale active 20a relativement fin et efficace d'un point de vue aérodynamique, avec donc une bonne efficacité en portance du rotor, et, d'autre part, comme on le verra plus loin, elle évite de faire fonctionner la pale active 20a dans une zone de « stagnation » pour la « pale descendante » (reculante) pendant un vol de croisière avec une vitesse horizontale de l'aérodyne qui, dans une architecture classique de rotor d'hélicoptère, concerne environ le quart de la pale le plus proche du mât rotor 10.
- La partie rigide 20b constitue l'attache ou bras d'attache de la pale active 20a sur le mât rotor 10, sa longueur est de l'ordre de 25 % à 50 % du rayon du rotor. Elle est à la fois très rigide en flexion et en torsion et est bien profilée aérodynamiquement vis-à-vis de la rotation du rotor grâce à un profil oblong ou ovale 200b pour minimiser sa traînée quand le rotor est en rotation. Sa troisième caractéristique très importante vis-à-vis de l'invention est que la portance de la partie 20b est nulle ou quasi nulle. En effet, pour obtenir un profil rigide en flexion de la partie 20b, il faut créer une poutre très épaisse qui aurait un rendement de portance mauvais et donc une traînée significative qui contribuerait à dégrader le rendement du rotor en générant un couple résistant important. Pour préciser ce que l'on entend par une grande rigidité en flexion de la partie 20b, il est souhaitable par exemple que la flèche en extrémité de la partie 20b, sous l'effet de son propre poids et du poids de la pale active 20a, soit inférieure à quelques % de sa longueur, par exemple inférieure à 2 % de sa longueur.
- La partie 20c porteuse ou bras porteur du contrepoids 20d se caractérise elle aussi comme la partie 20b par :
   ∘ une très grande rigidité en flexion et torsion,
   ∘ une section transversale de forme oblongue ou ovale 200c, dont la caractéristique principale est d'offrir une résistance aérodynamique minimale pendant la rotation de la mono pale,
   ∘ et une portance quasi nulle pendant la rotation de la mono pale.
- La partie 20c a une longueur sensiblement égale à celle de la partie 20b.
- Les parties 20b et 20c ne contribuent pas à la portance. Celle-ci est essentiellement apportée par la pale active 20a. De façon marginale, on peut organiser une légère portance (inférieure à 5 % de la portance totale) au niveau de la partie d'attache 20b, mais l'efficacité de cette portance en termes de rendement est mauvaise.
- Il faut souligner ici que, quand un hélicoptère se déplace à une vitesse horizontale V, cette vitesse s'ajoute à la vitesse de rotation sur la partie « remontante » (ou avançante) de la trajectoire de la pale et se soustrait à la vitesse de rotation sur la partie « reculante » (ou descendante). Ainsi, dans la région des pales proche du mât rotor d'un hélicoptère en translation, la vitesse relative devient négative et cette zone est une zone dite de « stagnation », qui a peu d'impact positif sur la portance du rotor.
- La partie 20b est articulée en 110, à pivotement autour d'un axe transversal YY, parallèle à l'axe de tangage quand la mono pale est arrêtée, au niveau du mât rotor 10. Nous verrons plus loin que, contrairement au rotor d'hélicoptère classique, où les articulations de battement sont légèrement décalées par rapport au mât rotor, ici, il est essentiel que cette articulation 110 se fasse au niveau du mât rotor 10, dont l'axe de rotation ZZ est sécant avec et perpendiculaire à l'axe YY, lequel est aussi sécant avec et sensiblement perpendiculaire à l'axe longitudinal de la mono pale 20 au repos, de façon à ne pas introduire de moments de flexion alternatifs d'avant en arrière avec le mouvement de rotation de la mono pale 20.
- Le contrepoids 20d est placé à l'extrémité de la partie rigide 20c qui est éloignée du mât rotor 10. Il présente une forme aérodynamique optimum, à la fois en rotation transversalement, quand le rotor tourne, et en translation, quand le rotor est arrêté en position pour le vol de croisière (de face) de façon à minimiser sa résistance aérodynamique en vol vertical et en vol horizontal.
- Le pas de la pale active 20a peut être fixe et calé sur une incidence positive lui procurant une bonne portance, ou est pilotable par un système de biellettes classique, comme sur tous les hélicoptères. Dans le cas des figures 2a et 2b (une seule mono pale 20), le pilotage du pas est de préférence collectif et cyclique.

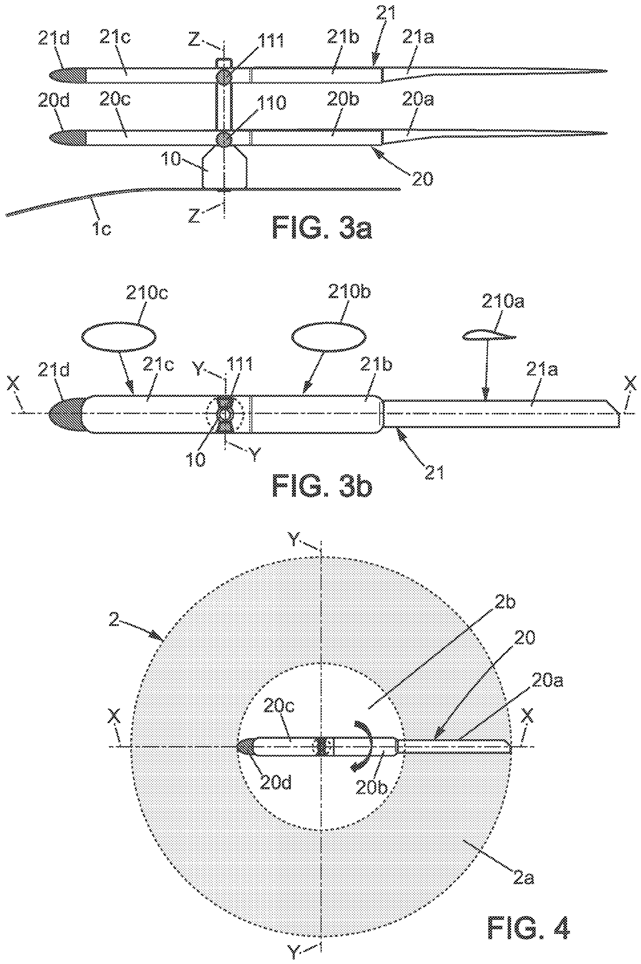

Les figures 3a et 3b, qui sont respectivement une vue de profil et une vue de dessus d'un autre rotor, correspondent respectivement aux figures 2a et 2b, mais dans une configuration de rotor avec deux mono pales 20 et 21 contrarotatives et coaxiales autour du même axe ZZ de rotation du mât rotor 10. Cette configuration est la configuration préférée de l'invention, car elle permet d'augmenter le rendement (FOM) du rotor par rapport à un rotor avec une mono pale unique, sans trop de complexité mécanique, grâce à la suppression de la commande de pas cyclique, et enfin elle permet de s'affranchir de la nécessité d'un rotor de queue pour équilibrer le couple moteur. Les deux mono pales 20 et 21 contrarotatives sont sensiblement identiques l'une à l'autre et à la mono pale 20 des figures 2a et 2b, à la différence près de l'orientation des profils aérodynamiques 200a et 210a des pales actives 20a et 21a, qui sont orientés en sens inverses puisque leur sens de rotation sont opposés et leur vitesses de rotation sont égales mais opposées.
- Dans le cas des figures 3a et 3b, une différence importante avec les figures 2a et 2b est que le pilotage du pas des pales actives 20a et 21a est, selon l'invention, un pilotage uniquement collectif. La partie cyclique du pilotage en roulis et en tangage de l'aérodyne est assurée de préférence, par les soufflantes d'attitude 4a, 4b et 4c situées au bout des ailes la et à l'extrémité avant du fuselage 1c. En effet, la Demanderesse considère que l'introduction d'une commande de pas cyclique dans un tel rotor contrarotatif serait d'une extrême complexité. En revanche, une commande de pas collectif est facilement envisageable pour un tel rotor (voir en particulier la figure 9 qui illustre une des solutions de commande de pas collectif).

La figure 4 représente une vue de dessus du rotor des figures 2a et 2b selon l'invention, où l'on voit les zones respectives balayées par la mono pale 20 pendant sa rotation. La surface 2a (en gris sur la figure) représente la zone balayée par la partie «active » 20a de la mono pale. Il s'agit d'un anneau circulaire en périphérie du disque rotor 2, donc dans une partie où la vitesse d'avance de la pale active 20a est la plus importante, et donc où les rendements de portance sont les meilleurs. La surface centrale 2b du disque rotor est inactive pour la portance et on note qu'il n'y a plus de zone de stagnation avec cette architecture de rotor.

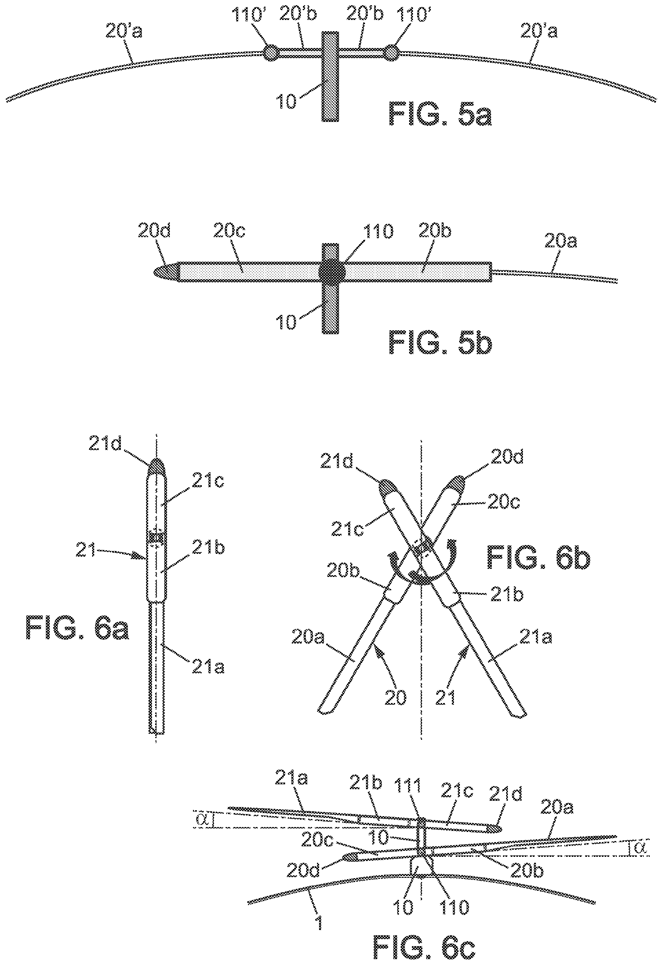

La figure 5a montre schématiquement un rotor classique bipale d'hélicoptère avec sa partie centrale 20'b et les pales 20'a, dont chacune est articulée en 110' sur l'extrémité radiale externe de la partie centrale 20'b solidaire en rotation du mât rotor 10.

La figure 5b montre schématiquement un rotor selon les figures 2a et 2b de l'invention avec sa pale active 20a et sa partie 20b d'attache articulée en 110 sur le mât rotor 10, de l'autre côté duquel s'étend la partie 20c porteuse du contrepoids 20d. Les diamètres des rotors sont sensiblement équivalents et les pales 20'a et la pale active 20a ont une structure elle aussi sensiblement équivalente. Il est notoirement connu que les pales 20'a de rotor d'hélicoptère présentent une flèche due à la flexion de la pale 20'a au repos qui peut être significative (quelques dizaines de centimètres en bout de pale). Dans le rotor selon l'invention, le fait de réduire la longueur de la pale active 20a, pour ne conserver que la partie de sa longueur très efficace vis-à-vis de la portance, a une incidence considérable sur la flexion statique ou dynamique de la pale active 20a. Par exemple, une réduction de un tiers de sa longueur réduit la flèche de plus de 70 %, toutes choses égales par ailleurs. Cette disposition permet d'avoir une pale active 20a beaucoup plus rigide, toutes choses égales par ailleurs. La rigidité de cette pale active 20a est très utile pour stabiliser le rotor dans les phases d'arrêt et de remise en rotation du rotor, ainsi que dans les vols de croisière à très grande vitesse. C'est une disposition fondamentale de l'invention. Un autre aspect très important de l'invention, qui apparaît sur les figures 5a et 5b, est la différence entre la position de l'articulation de pale 110' d'un rotor classique d'hélicoptère (Fig. 5a) et celle de l'articulation 110 dans le mât 10 du rotor selon l'invention (Fig.5b). Dans le cas classique d'un hélicoptère, la longueur du bras de levier 20'b entre l'articulation de pale 110' et l'axe vertical du rotor 10 joue un rôle déterminant dans la dynamique de vol de l'hélicoptère, en particulier vis-à-vis du tangage et du roulis. Alors que dans le cas du rotor selon les figures 2a et 2b de l'invention, l'articulation 110 de la mono pale 20 doit être placée au niveau de l'axe vertical du mât rotor 10. La dynamique de l'aérodyne en roulis et tangage est gérée par les stabilisateurs 4a à 4c du type de ceux qui sont représentés sur la Fig. 1.

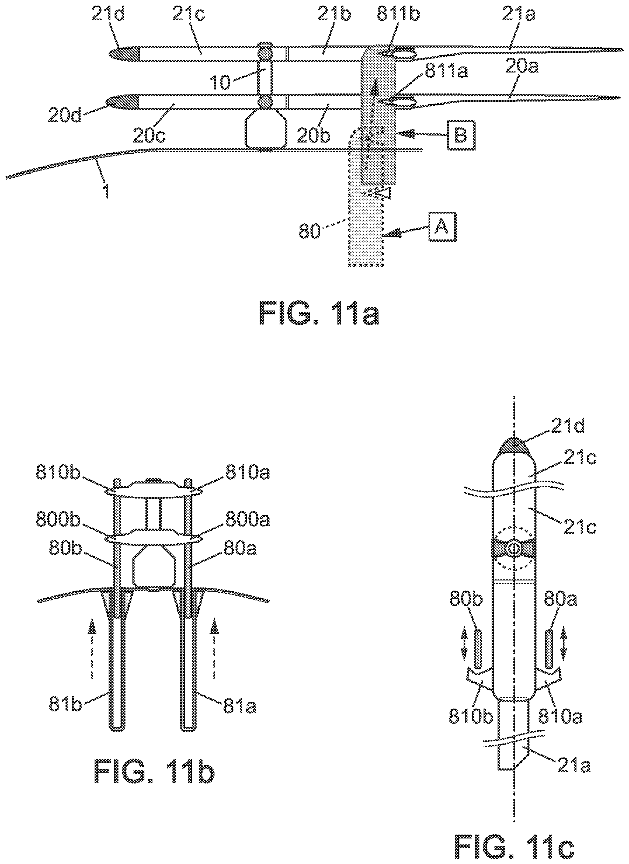

Les figures 6a, 6b et 6c montrent respectivement le rotor objet de l'invention avec deux mono pales 20 et 21 contrarotatives et coaxiales en vue de dessus à l'arrêt, par exemple en vol de croisière, puis en vue de dessus au démarrage de la rotation des mono pales 20 et 21, puis vu de face pendant la rotation des mono pales 20 et 21. Les principaux points remarquables de l'invention qu'il faut souligner dans ces figures sont :
- les structures des mono pales 20 et 21 sont « monoblocs », c'est-à-dire que les parties rigides 20b et 20c d'une part, et 21b et 21c d'autre part sont continues et articulées en 110 et 111 autour d'axes transversaux YY parallèles et décalés l'un au-dessus de l'autre exactement au niveau de l'axe vertical ZZ du mât rotor 10.
- Ces articulations 110 et 111 situées au niveau de l'axe de rotation du rotor, permettent aux mono pales 20 et 21 de s'orienter selon l'équilibre des forces de portance et des efforts centrifuges. La position des articulations 110 et 111 permet d'éviter qu'un moment de flexion parasite s'exerce d'avant en arrière sur le mât rotor 10.
- Les contrepoids 20d, 21d étant solidaires des parties rigides 20c et 21c, leurs positions varient angulairement, de la même façon que les parties rigides 20c et 21c et les pales actives 20a et 21b, et par conséquent les forces centrifuges sont constamment équilibrées.
- On fait le choix d'avoir des niveaux de raideur de ces articulations 110 et 111 très faibles pour des angles (α) de mono pales 20 et 21 positifs (vers le haut) et très élevés pour des angles de pales nul ou négatif (vers le bas).
- En outre, le système rotor des figures 6a, 6b et 6c comporte des moyens de verrouillage en position des mono pales 20 et 21 quand celles-ci sont à l'arrêt et orientées vers l'arrière de l'aérodyne (voir figures 11a à 13 en configuration de vol de croisière).
- Le pas des pales actives 20a, 21a est, de préférence, réglable de façon collective (voir figure 9), il n'y a pas de réglage cyclique du pas des pales actives comme dans la plupart des hélicoptères.
- Cependant, pour certaines applications, on peut se contenter d'un pas fixe des pales actives 20a et 21a, la force de portance du rotor étant réglée dans ce cas par la modulation de la vitesse de rotation des mono pales 20 et 21. Dans ce cas, le pas de chaque pale active 20a et 21a est fixe et optimisé pour la situation de portance maximum du rotor, lorsqu'il tourne à sa vitesse de rotation nominale.

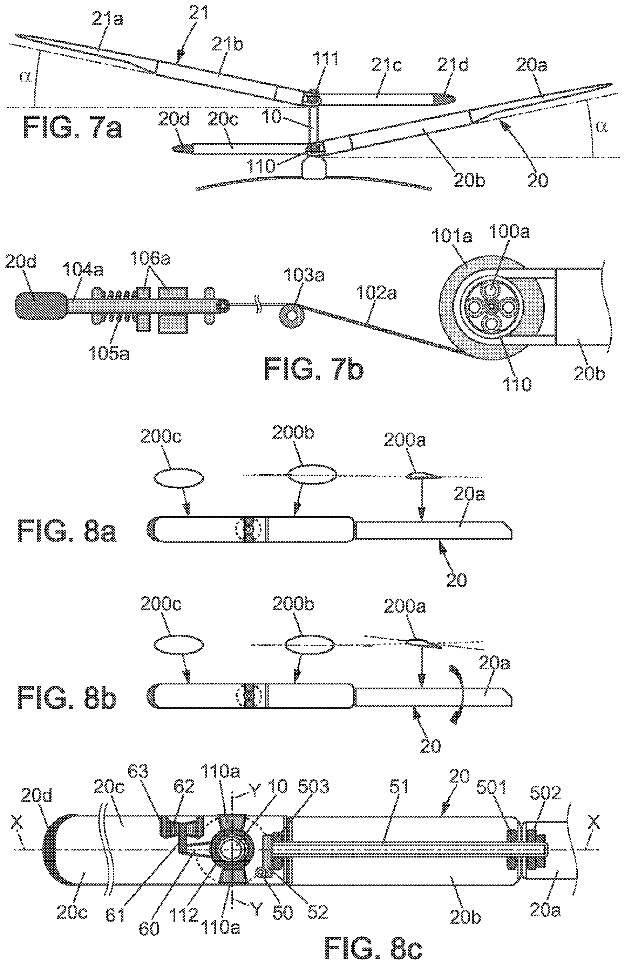

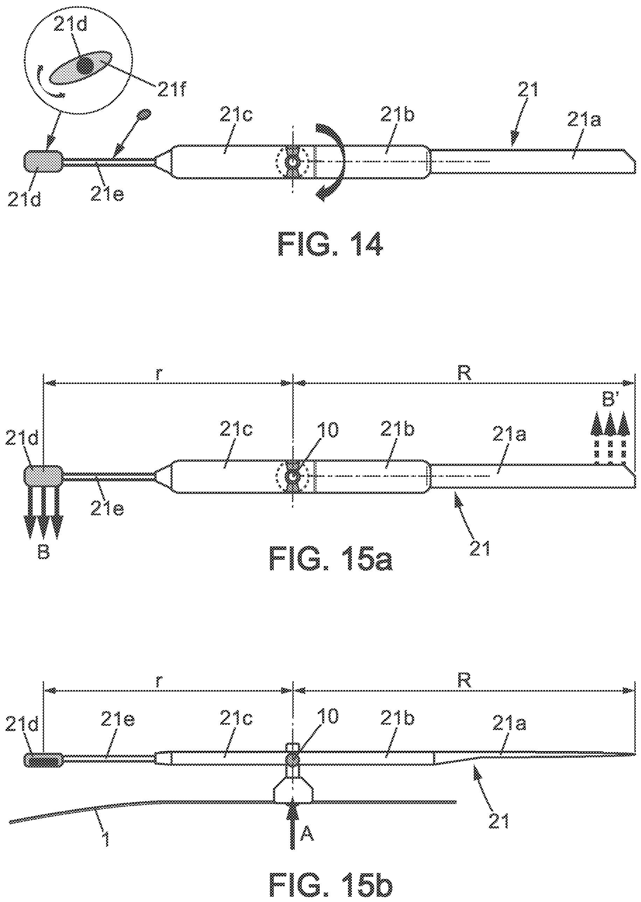

La figure 7a représente une configuration qui est une variante des figures 6a à 6c dans laquelle les parties rigides 20b et 20c, ainsi que 21b et 21c, ne sont pas solidaires l'une de l'autre. Les parties rigides 20c et 21c, porteuses des contrepoids 20d et 21d, restent horizontales pendant la rotation des mono pales 20 et 21. Cette configuration présente l'avantage de réduire l'espacement entre les deux mono pales 20 et 21 contrarotatives, puisque les bras 20c et 21c porteurs de contrepoids 20d et 21d restent horizontaux. Ceci est, en particulier, utile dans la configuration illustrée à la figure 14 décrite ci-dessous, où le contrepoids 21d est placé au bout d'un système 21e prolongateur de la partie rigide 21c, avec donc, de façon corollaire, un débattement vertical important puisque le contrepoids 21d est très éloigné, dans ce cas de figure, de l'axe de rotation du mât rotor 10. Bien entendu, sur la figure 7a, les parties rigides 20 b et 21b sont toujours articulées en 110 et 111 au niveau du mât rotor 10 pour ne pas créer de moments parasites. Cependant, le fait que les parties rigides 20c et 21c porteuses des contrepoids 20d et 21d ne s'orientent pas angulairement comme les pales actives 20a et 21a et les parties rigides 20b et 21b, crée un léger déséquilibre dans l'équilibrage des efforts centrifuges des mono pales 20 et 21 et des contrepoids 20d et 21d. Pour obtenir un parfait équilibre des forces centrifuges dans cette situation, la Demanderesse propose, à titre d'exemple, un système d'équilibrage qui permet de déplacer légèrement (de quelques centimètres) le contrepoids 20d ou 21d de façon à ce que, quand l'angle (α) de la pale active 20a ou 21a correspondante augmente, le contrepoids 20d ou 21d se rapproche légèrement du mât rotor 10 pour compenser la réduction des forces centrifuges de la pale active 20a ou 21a et sa partie rigide porteuse 20b ou 21b. Le contrepoids 20d ou 21d est placé initialement dans une position d'équilibre moyen des forces centrifuges, le système d'équilibrage proposé le déplace ensuite légèrement vers l'axe de rotation du mât rotor 10, quand l'amplitude angulaire (α) de la pale active 20a ou 21a augmente, et en sens inverse quand elle se réduit. Un exemple d'un tel système d'équilibrage est montré à la figure 7b, pour la mono pale 20 :
- la partie rigide 20b de la mono pale 20 est articulée autour de l'articulation 110 qui, par l'intermédiaire par exemple d'un engrenage planétaire 100a entraîne un disque ou une poulie 101a sur lequel ou laquelle est solidement attaché un câble 102a qui est guidé par des guides 103a, 106a à l'intérieur de la partie rigide 20c jusqu'à un arbre 104a, à l'extrémité radiale interne duquel le câble 102a est attaché, et dont l'extrémité radiale externe (par rapport au mât rotor 10) est solidaire du contrepoids 20d. Un ressort 105a permet de maintenir constamment le système en tension, en prenant appui d'un côté contre une butée solidaire de l'arbre 104a et de l'autre côté contre un guide 106a retenu dans la pièce rigide 20c.
- Le rapport de démultiplication de l'engrenage planétaire 100a et le diamètre de la poulie 101a sont choisis de façon à ce que l'équilibre des forces centrifuges soit respecté en toute situation d'angle de conicité α de la pale active 20a.

Une alternative à la figure 7b qui n'a pas été représentée est de faire varier légèrement la position du centre de gravité de la pale active 20a en l'éloignant légèrement du mât rotor 10 quand l'angle conique α augmente grâce à un dispositif analogue à celui de la figure 7b, mais inversé.

Les figures 8a, 8b et 8c sont une illustration d'une architecture possible à la fois d'entraînement en rotation d'une mono pale telle que 20 et de la variation du pas de sa pale active 20a :
- La figure 8a montre la mono pale 20 au repos: le profil 200a de la pale active 20a est horizontal pour minimiser sa traînée. Cette situation se retrouve, par exemple, pendant le vol de croisière ou bien au moment du lancement en rotation du rotor pour minimiser le couple de mise en rotation.
- La figure 8b montre la mono pale 20 pendant la rotation du rotor. Le profil 200a de la pale active 20a a une incidence par rapport au plan horizontal, ce qui permet de générer un effort de portance vertical.
- La figure 8c montre à la fois les moyens d'entraînement de la pale en rotation et les moyens pour faire varier son incidence :
   ∘ Chaque mono pale telle que 20 est articulée autour d'un axe YY transversal, horizontal et perpendiculaire à l'axe vertical ZZ du mât rotor 10, par deux articulations 110a ou 111a pour la mono pale 21 supérieure le cas échéant) fixées elles-mêmes sur une pièce 112 concentrique au mât rotor 10 et qui autorise des rotations de faibles amplitudes autour de l'axe de rotation Z pour absorber les fluctuations de traînée de la mono pale 20.
   ∘ la mono pale 20 peut avantageusement être entraînée en rotation par l'intermédiaire d'un bras 60 solidaire du mât rotor 10, et de son prolongement 61 encastré dans un système d'articulation/butée élastomère 62,63 amorti, qui permet, à la fois, d'entraîner en rotation la mono pale 20 et d'amortir les fluctuations d'efforts de traînée, qui résultent en particulier des fluctuations d'efforts de portance de sa pale active 20a en fonction de sa situation pendant le vol.
   ∘ La modification du pas de la pale active 20a peut avantageusement être faite par l'intermédiaire d'un arbre 51 qui traverse toute la partie rigide 20b dans sa longueur et qui est solidaire en rotation sur lui-même autour de son axe longitudinal, par son extrémité externe (éloignée du mât rotor 10), du pied de la pale active 20a, l'ensemble est retenu et monté rotatif par des butées et roulements 501, 502, 503 solidaires de l'arbre 51, pour supporter les efforts centrifuges de la pale active 20a et lui permettre de s'orienter en rotation. La butée de biellette 50 est reliée au levier 52 de commande de pas, solidaire de l'extrémité interne de l'arbre 51, à l'intérieur de l'extrémité de la partie rigide 20c qui est adjacente à la partie rigide 20b, et dans laquelle l'arbre 51 traverse la butée de roulement 503, et permet de contrôler le pas de la pale active 20a avec des moyens qui sont, par exemple, illustrés à la figure 9, décrite ci-dessous.

La figure 9 illustre à la fois la chaîne cinématique d'entraînement des mono pales 20 et 21 en rotation, l'entraînement de l'hélice propulsive 3 de l'aérodyne, et la façon de maîtriser le pas collectif des pales actives 20a et 21a :
- l'entraînement des mono pales 20 et 21 en rotation : la Demanderesse a illustré sur cette figure 9 une architecture possible de motorisation du rotor pendant les phases de vol vertical, ainsi que les dispositifs appropriés pour freiner le rotor et le positionner en toute sécurité pendant le vol de croisière et pour pouvoir le relancer en rotation lors de la transition inverse du vol de croisière vers le vol vertical. Le mât rotor est constitué de deux arbres coaxiaux 10a et 10b tournant de façon contrarotative pour entraîner chacun l'une respectivement des deux mono pales 20 et 21 qui tournent en sens opposé. Les arbres 10a, 10b sont entraînés par une boîte de transmission mécanique 72, elle-même entraînée par un axe moteur 71. Avantageusement, l'axe moteur 71 présente sur son parcours deux articulations de type « cardan » 711, 712 qui permettent le cas échéant, d'incliner l'ensemble du rotor d'avant en arrière de quelques degrés (2°-3°). Pendant la phase de vol stationnaire ou semi stationnaire (vol horizontal avec sustentation par le rotor), le mât rotor est entraîné par un moteur principal 70 (moteur thermique à 4 ou 2 temps, turbine à gaz...) muni d'un embrayage 70a, d'une roue libre 70b et d'une boîte de transmission 70c. Pendant la phase d'arrêt du rotor (transition vol vertical/ vol horizontal), le moteur 70 est arrêté et débrayé, le rotor continue à tourner librement, le pas des pales actives 20a et 21a est mis à zéro, la rotation est freinée par un frein 710, puis les mono pales 20 et 21 sont amenées en position de vol de croisière grâce à un moteur électrique 73 qui comporte lui aussi son embrayage 73a, sa roue libre 73b, et sa courroie de transmission 73c. Dans la situation inverse, lors de la transition du vol de croisière vers le vol vertical, le pas des pales actives 20a et 21a est gardé à zéro, le frein 710 est libéré et le moteur électrique 73 entraîne en rotation le rotor jusqu'à une vitesse suffisante pour que le moteur principal (70) puisse être embrayé et entraîne le rotor avec une prise de pas progressive des pales actives 20a et 21a. Enfin, pour accélérer la mise en rotation du rotor en fin de phase de vol horizontal, on peut soit incliner très légèrement (2° à 3°) le rotor à la façon d'un girodyne grâce aux articulations cardan 711, 712 décrites ci-dessus, ou bien, de préférence, profiter d'un profil dissymétrique des parties rigides telles que 20b et 20c comme décrit ci-dessous en référence à la figure 10 pour obtenir une mise en rotation naturelle des mono pales 20 et 21 par le vent relatif (effet d'éolienne).
- Entraînement de l'hélice propulsive 3 : l'hélice 3 propulsive ou tractive est entraînée pendant le vol de croisière par un système de transmission 31c, les embrayages 31a, 30a, roues libres 31b, 30b et un arbre de transmission 31 sensiblement parallèle à celui 71 qui entraîne le rotor pendant la phase de vol vertical. Avantageusement la Demanderesse propose que l'hélice 3 propulsive soit aussi entraînée par un moteur 30 débrayable (à l'aide de l'embrayage 30a et de la roue libre 30b) de faible puissance, par exemple d'une puissance égale à 10% de la puissance du moteur principal 70, ce qui offre les avantages suivants :
   ∘ Pendant la phase de vol vertical pur, l'hélice 3 n'est pas entraînée par le moteur principal 70, elle est débrayée au niveau de l'embrayage 31a. Le moteur auxiliaire 30 tourne au ralenti et entraîne l'hélice 3, dont le pas est mis à zéro pour ne pas générer de force propulsive.
   ∘ En phase transitoire du vol vertical vers le vol de croisière horizontal, le pas de l'hélice 3 est progressivement augmenté, le moteur auxiliaire 30 tourne à plein régime.
   ∘ Puis le moteur principal 70 est embrayé en 31a, le rotor est déconnecté par l'embrayage 70a, le moteur auxiliaire 30 peut rester connecté ou être déconnecté.
   ∘ La puissance du moteur principal 70 est transmise intégralement à l'hélice 3 pour propulser l'aérodyne en vol de croisière.
   ∘ La transition inverse d'un vol de croisière horizontal vers le vol vertical est réalisée de façon inverse.
   ∘ Les très grands avantages de cette architecture sont :
      ▪ L'hélice 3 est démarrée et arrêtée de façon indépendante de la motorisation principale, donc dans des conditions facilement maîtrisables.
      ▪ En cas d'avarie du moteur principal 70, l'aérodyne peut se poser en vol « avion » en utilisant le moteur auxiliaire 30.
      ▪ Cela évite d'avoir à doubler la motorisation principale, comme l'exigent la plupart des réglementations en matière de vol vertical.
      ▪ En cas d'avarie du moteur auxiliaire 30, l'aérodyne peut se poser en vol vertical sur son moteur principal 70.
- Réglage du pas collectif des pales actives 20a et 21a : la Demanderesse a illustré sur la figure 9 une possibilité (il existe d'autres possibilités) d'architecture de commande du pas des pales actives 20a et 21a. Le pas des pales actives est commandé collectivement par des biellettes 50a, 50b (voir aussi figure 8c). La position des biellettes 50a, 50b est commandée par des plateaux collectifs 500a, 510a, 510b et 510c, qui se déplacent verticalement, parallèlement à l'axe de rotation, et dont les mouvements sont synchronisés pour que le pas des pales actives 20a et 21a soit exactement le même.

La figure 10 illustre une architecture particulièrement intéressante des parties rigides 20b et 20c porteuses de la pale active 20a d'un côté et du contrepoids 20d de l'autre côté. La mono pale 20 est montrée, par exemple, dans la situation d'une mise en rotation du rotor à la fin d'une phase de croisière horizontale (vitesse V, rotation de la mono pale 20 dans le sens horaire) et en transition vers le vol vertical. La particularité intéressante revendiquée par la Demanderesse est que les profils 200b et 200c des parties rigides 20b et 20c respectivement, qui sont globalement de forme ovale ou elliptique pour offrir une traînée minimum en rotation, comportent sur leur bord de fuite une forme « en creux » 201b ou 201c, créant ainsi une dissymétrie assez forte entre la traînée d'un profil dans un sens et celle de l'autre profil dans le sens opposé. Par exemple, telle que la mono pale 20 est dessinée sur la figure 10, avec la vitesse V orientée dans le sens indiqué sur la figure 10 et la rotation du rotor dans le sens horaire comme indiqué sur cette figure 10, la traînée de la partie rigide 20b sera très faible alors que la traînée de la partie 20c sera plus importante compte tenue de la forme « en creux » 201c. Ainsi, lors du redémarrage du rotor et après désengagement du frein 710, et mise en rotation par le moteur électrique 73 (voir figure 9), le vent relatif exerce sur l'ensemble du système un couple de rotation lié à la dissymétrie des profils 200b et 200c qui permet d'accélérer la mise en rotation du rotor.

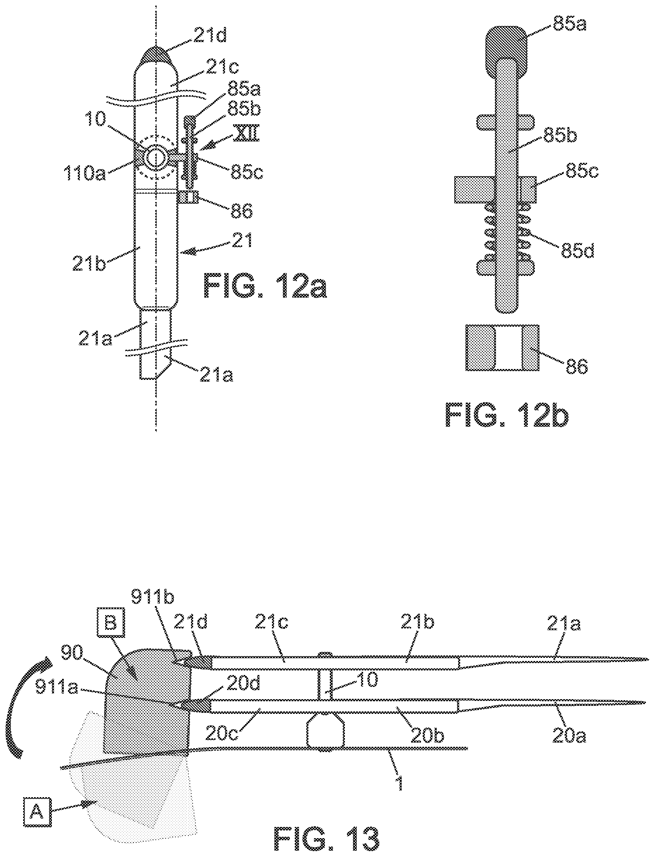

Pendant le vol de croisière à grande vitesse, il est important de verrouiller le rotor dans une position rigide. Pour cela, la Demanderesse propose avantageusement d'adjoindre, aux systèmes de freins et de verrouillage sur l'axe rotor déjà évoqués, des systèmes de verrouillage mécanique. Un de ces systèmes est illustré en vue de profil, vue de face, et vue de dessus respectivement sur les figures 11a, 11b et 11c ; un autre système, complémentaire ou alternatif, est décrit ci-dessous en référence à la figure 13.
- Une fois que le rotor est positionné dans sa configuration de vol de croisière par les systèmes décrits précédemment, et avant que la vitesse de l'aérodyne ne soit trop importante, il est préférable de verrouiller mécaniquement la position du rotor. Cela peut se faire en ayant un dispositif de verrouillage 80, qui reste masqué en position A sur la figure 11a, dans des logements 81a et 81b pour dispositifs de verrouillage 80a et 80b sur la figure 11b dans le corps ou fuselage de l'aérodyne 1, pendant la rotation du rotor, puis, au début du vol de croisière, vient verrouiller (position B sur la figure 11a) le rotor de chaque côté des parties rigides 20b et 21b des mono pales 20 et 21, en venant s'appuyer, par des encoches en creux 811a et 811b prévues à cet effet sur des parties en saillie 800a, 800b et 810a et 810b, de chaque côté des parties rigides 20b, 21b.
- Le rotor est ainsi verrouillé mécaniquement et solidement pendant le vol de croisière. Même à grande vitesse, les instabilités vibratoires sont maîtrisées puisque les pales actives 20a, 21a ont une longueur réduite qui leur confère une bonne rigidité.

La figure 12a montre une vue d'ensemble et la figure 12b une vue du détail (XII de la figure 12a) d'un dispositif de verrouillage d'une mono pale telle que 21 au niveau du mât rotor 10 pendant le vol de croisière. Par souci de simplification du dessin, ce dispositif est représenté à l'extérieur de la mono pale 21, mais en réalité, il est de préférence intégré à l'intérieur des parties rigides 21b, 21c de cette mono pale 21 pour une meilleure aérodynamique. Le principe de ce système est qu'un dispositif de blocage de la mono pale 21 en position horizontale verrouille la mono pale horizontalement quand celle-ci n'est plus en rotation, et la libère quand le rotor se met à tourner. Le dispositif de verrouillage, qui est fixé sur l'arbre vertical du mât rotor par l'intermédiaire d'un guide 85c comprend un axe coulissant 85b muni d'une masselotte 85a d'extrémité qui, sous l'effet de la force centrifuge, et contre l'action du ressort de rappel 85d sur l'axe 85b, libère l'axe 85b de son logement de verrouillage 86 qui est fixé sur la partie rigide 21b de la mono pale 21. La mono pale 21 peut ensuite débattre normalement en fonction des fluctuations de la portance. A l'inverse, quand le rotor s'arrête et que la mono pale 21 revient en position horizontale, le dispositif de verrouillage revient verrouiller la mono pale 21 en position horizontale, par le ressort 85d qui pousse l'axe 85b dans le logement 86.

La figure 13 montre une alternative au système de verrouillage selon les figures 11a à 11c. Dans cette option, le ou les panneaux de verrouillage 90 sont masqués pendant la rotation du rotor en position A dans le corps de l'aérodyne 1. Après l'arrêt du rotor, le ou les panneaux 90 sont relevés et viennent s'appuyer, par des encoches ou logements 911a, ,911b prévus à cet effet, sur la ou les extrémités avant des mono pales 20 et 21, c'est-à-dire sur les contrepoids 20d, 21d. De cette façon, en plus des fixations au niveau du mât rotor 10 selon les figures 12a et 12b, le rotor est solidement verrouillé sur une partie rigide qui peut maintenir le rotor en position horizontale pendant tout le vol de croisière à grande vitesse. Bien entendu, les panneaux de verrouillage 90 sont profilés de façon à offrir une résistance aérodynamique minimale pendant le vol de croisière.

La figure 14 montre, par exemple sur la mono pale 21, la possibilité d'avoir un contrepoids 21d en position déportée, donc plus éloigné de l'axe de rotation du rotor. Le contrepoids 21d est fixé à l'extrémité d'une tige 21e rigide de faible diamètre, qui prolonge la partie rigide 21c, pour minimiser les efforts de la traînée pendant la rotation du rotor. De façon avantageuse, le contrepoids 21d a une forme aérodynamique oblongue, orientée selon la vitesse moyenne du flux d'air vue par le rotor. La tige 21e peut avoir une section circulaire ou oblongue, orientée comme le contrepoids 21d. Dans ces conditions, la traînée générée par le contrepoids 21d est faible. Pour réduire encore la traînée du contrepoids 21d, on peut avantageusement l'enfermer dans une forme de traînée minimale et oblongue 21f portée par la tige 21e et capable, grâce à une articulation élastique, de s'orienter exactement dans la direction du flux d'air pendant la rotation du rotor. L'avantage de la configuration de la figure 14 est la minimisation de la masse du contrepoids 21d du fait d'un éloignement plus grand par rapport à l'axe de rotation du rotor. Les inconvénients sont, d'une part, une légère perturbation du flux d'air généré par le rotor, et surtout une interférence géométrique plus importante, en particulier dans le cas d'un rotor à deux mono pales coaxiales et contrarotatives telles que 20 et 21, ce qui oblige à augmenter l'espacement vertical entre les deux mono pales. En revanche, la configuration de la figure 14 est particulièrement bien adaptée à la situation selon la figure 7 où le contrepoids 20d ou 21d reste horizontal.

Les figures 15a et 15b montrent respectivement en plan et en élévation latérale la possibilité d'entraîner une mono pale telle que 21 selon la figure 14 d'un rotor selon l'invention, en utilisant un flux d'air compressé, prélevé soit au niveau de compression des étages d'une turbine à gaz, soit issu d'un compresseur entraîné par un moteur thermique, et qui est ensuite « éjecté » en périphérie du rotor, après que le flux d'air comprimé ait cheminé à travers des tuyauteries, des flexibles et des joints d'étanchéité tournants dans le mât rotor 10 puis dans la mono pale 21. Il s'agit d'une technique connue d'entraînement d'un rotor, et certains hélicoptères (DJINN par exemple) ont utilisé cette technique. L'avantage est que ce système d'entraînement ne crée pas de couple sur la structure de l'aérodyne, et donc ne nécessite pas d'avoir un rotor de queue ou anti-couple. La particularité selon l'invention est que la force propulsive (motrice) par éjection du flux d'air B est créée de préférence au niveau du contrepoids 21d porté par un bras prolongateur 21e tubulaire, qui prolonge la partie rigide 21c. De cette façon, il y a très peu d'interférence avec la performance aérodynamique de la pale active 21a, et la position exacte du jet B peut être optimisée pour minimiser la puissance absorbée par l'air comprimé (minimisation du débit d'air). La Demanderesse a ainsi déterminé qu'un rapport optimum r/R (voir figures 15a et 15b) du rayon moyen r du jet d'air au rayon R du rotor se situe entre 55 % et 85 %. Le flux d'air prélevé au niveau du compresseur arrive en A dans le mât rotor 10 et sort en B du contrepoids 21d (le cas échéant on peut aussi éjecter une partie de l'air par l'extrémité de la pale active 21a en B', mais cette possibilité semble moins performante), et générant ainsi une force qui permet d'entraîner le rotor. Bien entendu, les figures 15a et 15b montrent l'application de ce système à un rotor à une mono pale, mais on peut aussi l'appliquer à un rotor à deux mono pales coaxiales et contrarotatives comme celui des figures 3a et 3b.

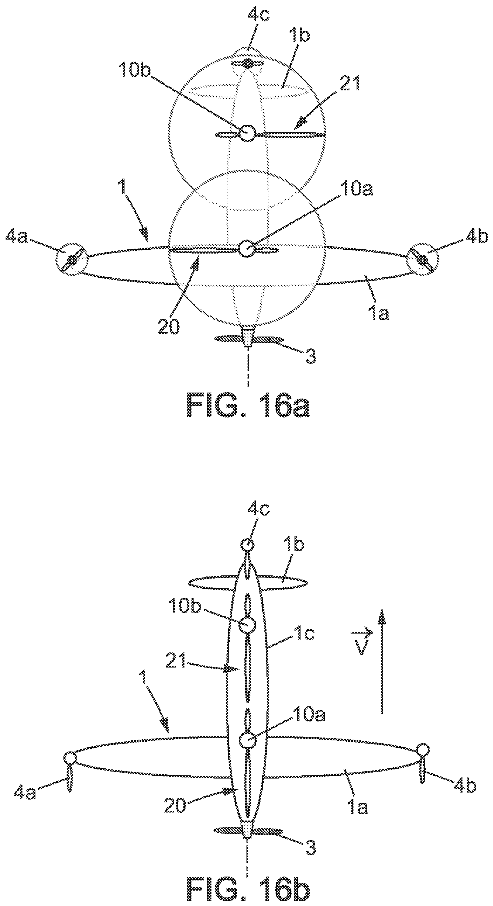

Les figures 16a et 16b représentent schématiquement, respectivement en vol stationnaire ou vertical et en vol horizontal ou de croisière, une variante de l'aérodyne des figures la et 1b, variante dans laquelle l'aérodyne 1, comme celui des figures la et 1b, comprend une voilure fixe constituée d'une aile arrière double 1a, et, à l'avant, d'une voilure canard 1b, cette voilure fixe étant supportée par le fuselage 1c, qui supporte également le rotor 2 de sustentation en vol vertical, et dont la rotation est arrêtée en fin de phase de transition du vol vertical au vol horizontal de croisière à grande vitesse. Dans l'exemple des figures la et 1b, le rotor 2 est schématiquement représenté comme étant constitué d'un rotor à deux mono pales 20 et 21 coaxiales et contrarotatives autour d'un même axe de rotation du rotor, qui est l'axe du mât rotor 10. Bien entendu, sur les figures la et 1b, le rotor 2 peut ne comporter qu'une seule mono pale telle que 20 ou 21. En vol horizontal de croisière, la ou les mono pale (s) 20 et/ou 21 est ou sont alignées dans la direction de l'axe de roulis de l'aérodyne 1, de sorte que leurs pales actives soient dirigées vers l'arrière et le contrepoids vers l'avant, par rapport au sens de déplacement de l'aérodyne à la vitesse *̅V̅*̅. Dans la variante intéressante d'application des mono pales selon l'invention, à la constitution d'un rotor de sustentation en vol vertical, apte à être arrêté en vol horizontal ou de croisière, les figures 16a et 16b représentent un aérodyne équipé d'un système rotor comprenant deux rotors dont chacun est constitué d'une mono pale selon l'invention. Par exemple, comme représenté sur les figures 16a et 16b, une mono pale 20 entraînée en rotation par un mât rotor 10a au niveau sensiblement du bord d'attaque des ailes arrière la constitue un rotor arrière, tandis qu'une autre mono pale 21, entraînée en rotation par un autre mât rotor 10b au-dessus de la partie avant du fuselage 1c, en arrière de la voilure canard 1b, constitue un second rotor, les mono pales 20 et 21 étant contrarotatives mais, dans cet exemple, chacune entraînée en rotation autour de l'un respectivement de deux axes de rotation qui sont décalés l'un de l'autre le long de l'axe de roulis de l'aérodyne 1. En vol de croisière (fig. 16b), chacune des mono pales 20 et 21 est orientée longitudinalement vers l'arrière de l'aérodyne 1, c'est-à-dire vers l'hélice propulsive 3, seuls les contrepoids et les parties rigides qui les supportent étant dirigés vers l'avant du mât rotor 10a ou 10b respectif.

Dans l'exemple des figures 16a et 16b, les mono pales 20 et 21 tournent en sens opposés avec le même pas angulaire, ce qui élimine la nécessité d'un rotor de queue pour équilibrer le couple moteur, puisque les couples sont inverses et de même amplitude. Dans la mesure où il n'y a plus, par rapport à la réalisation des figures la et 1b, de superposition des mono pales contrarotatives 20 et 21, le réglage du pas des pales actives de ces mono pales peut être de trois types :
- pas fixe : aucun réglage de pas avec des stabilisateurs 4a, 4b et 4c au bout des ailes la et à une extrémité du fuselage 1c ;
- pas réglable uniquement collectivement : avec des stabilisateurs 4a, 4b et 4c comme ci-dessus ; et
- pas réglable collectivement et cycliquement : avec ou sans stabilisateurs 4a, 4b et 4c comme ci-dessus.

Il est important de noter que les figures 16a et 16b représentent un aérodyne avec un système rotor à deux rotors mono pale, décalés sur l'axe de roulis de l'aérodyne et alignés en vol de croisière, mais il est possible d'installer une configuration avec 2n rotors, n étant supérieur ou égal à 1.

Sur les aérodynes 1 des figures 1a et 1b comme 16a et 16b, les systèmes de stabilisation 4a et 4b en bout d'ailes ainsi que le système de stabilisation 4c en extrémité (avant) du fuselage 1c peuvent être réalisés de la même façon que le rotor ou système rotor principal, de sustentation en vol vertical. Par conséquent, les systèmes de stabilisation 4a, 4b, 4c peuvent être réalisés sous la forme de rotors de stabilisation à au moins une mono pale articulée comme pour le rotor ou système rotor principal de sustentation en vol vertical, c'est-à-dire d'une seule mono pale, ou de deux mono pales contrarotatives et coaxiales, qui sont arrêtées et stockées en position de résistance aérodynamique minimale pendant le vol de croisière.

Ainsi, les systèmes de stabilisation 4a, 4b, 4c en bout d'ailes 1b et/ou en extrémité de fuselage 1c, pour contrôler les mouvements de roulis et de tangage de l'aérodyne 1, peuvent être réalisés de la même façon que le rotor ou système rotor principal de sustentation en vol vertical, mais à une échelle plus petite, correspondant à la fonction remplie par lesdits systèmes de stabilisation 4a, 4b, 4c, avec au moins une mono pale, telle que 20 ou 21, avec le contrepoids tel que 20d ou 21d.

La représentation schématique des systèmes de stabilisation 4a, 4b et 4c des figures 1a, 1b, 16a et 16b correspond à une réalisation à deux mono pales coaxiales contrarotatives, dont les deux mono pales sont, en position en vol de croisière (fig. 1b et fig. 16b), superposées et alignées vers l'arrière de l'aérodyne, parallèlement à son axe longitudinal. Pour ces systèmes de stabilisation 4a, 4b et 4c, l'entraînement en rotation par des moteurs électriques est une solution préférée. Elle permet de faire l'économie de lignes de transmission mécanique à partir d'au moins un des moteurs équipant l'aérodyne pour assurer l'entraînement en rotation du rotor ou système rotor de sustentation et d'au moins une hélice propulsive ou tractive, de sorte que cette solution est également légère.

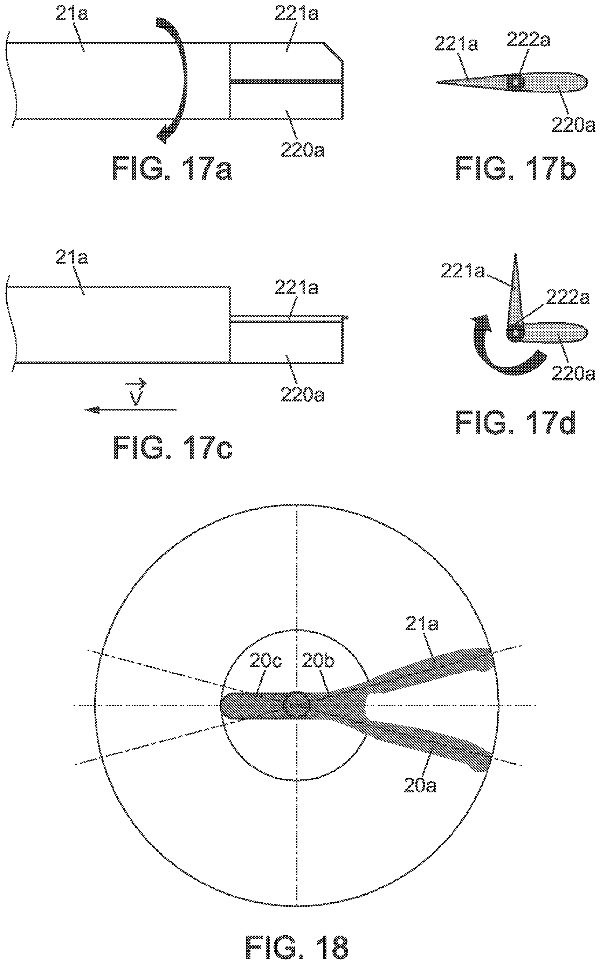

Les figures 17a, 17b, 17c et 17d illustrent une architecture de l'extrémité d'une pale active telle que 21a, qui permet à la mono pale correspondante 21 de revenir s'aligner dans l'axe longitudinal ou de roulis de l'aérodyne, quand le rotor est arrêté. En effet, à son extrémité libre, la pale active 21a comporte deux parties 220a et 221a adjacentes, dont l'une 220a prolonge le bord d'attaque et l'autre 221a le bord de fuite de la pale active 21a, et qui sont articulées entre elles autour d'un axe longitudinal 222a, sensiblement à mi-corde du profil de la pale active 21a. La position au repos de la partie arrière 221a est verticale, comme montré sur la figure 17c. Pendant la rotation (Fig. 17a), la partie arrière 221a est rabattue par le flux d'air ou vent relatif dans le prolongement de la partie avant 220a, et elle est bloquée dans cette position par un dispositif de blocage sensible à l'effort centrifuge, du type de celui décrit précédemment en référence à la figure 12 (et non représenté sur l'une des figures 17a à 17d pour ne pas surcharger le dessin). A l'arrêt du rotor, le dispositif de blocage se libère et la partie arrière 221a devient verticale par l'action, par exemple, d'un ressort de rappel (également non représenté) et agit sensiblement comme une dérive pour diriger la mono pale 21 dans l'axe longitudinal de l'aérodyne, avec la pale active 21a vers l'arrière et le contrepoids correspondant 21d vers l'avant de l'aérodyne.

La figure 18 montre une variante possible d'un rotor mono pale, dans laquelle la pale active est doublée 20a et 20b, pour augmenter la « solidité » du rotor, c'est-à-dire le rapport entre la surface de pale et la surface balayée par les pales. La mono pale comporte une seule partie rigide 20b (d'attache au mât rotor) qui est solidaire des pieds des deux pales actives 20a et 21a, écartées l'une de l'autre en V sensiblement dans le plan du disque rotor correspondant, et d'un angle au moins égal à 30°, de préférence, et le contrepoids à l'extrémité de la partie rigide 20c qui le supporte est dimensionné en conséquence.

## Revendications

1. Rotor pour aérodyne hybride, à voilure fixe et à voilure tournante apte à être immobilisée en vol de croisière de l'aérodyne, le rotor étant apte à produire de la portance par sa rotation en phase de vol vertical et à être immobilisé et stocké longitudinalement en phase de vol de croisière, du type comportant au moins une mono pale (20) avec contrepoids (20d) et un mât rotor (10), ladite mono pale comprenant:
- une pale active (20a) qui génère la portance du rotor pendant sa rotation ;
- une première partie (20b) qui porte ladite pale active (20a) et constitue la liaison de la pale active (20a) au mât rotor (10) ; et
- une deuxième partie (20c) qui porte ledit contrepoids (20d) et constitue la liaison du contrepoids (20d) audit mât rotor (10),
- la longueur de la pale active (20a) selon son envergure étant inférieure au rayon R du rotor ;
- ladite partie (20b) porteuse de la pale active (20a) étant une partie structurellement rigide, en particulier vis-à-vis de la flexion et de la torsion ;
- ladite partie (20b) porteuse de la pale active (20a) présentant une section transversale (200b) à profil aérodynamique ayant une portance nulle ou quasi nulle quand le rotor est en rotation ; et
- l'ensemble constitué par la pale active (20a) et la partie rigide (20b) porteuse de la pale active est articulé autour d'un axe transversal (YY) perpendiculaire à l'axe de rotation (ZZ) du rotor, sensiblement au niveau dudit axe de rotation (ZZ) du mât rotor (10), et à l'axe longitudinal de ladite pale active (20a) et de ladite partie rigide (20b) porteuse de la pale active, et sécant avec ledit axe de rotation (ZZ),
**caractérisé en ce que** le rotor comprend au moins deux mono pales (20, 21) sensiblement identiques et tournant en sens inverses, chacune autour de l'un respectivement d'axes de rotation espacés longitudinalement sur l'axe de roulis (XX) de l'aérodyne, ou contrarotatives autour d'un même axe (ZZ) de rotation du mât rotor (10),
**en ce que**, pendant le vol de croisière, chaque mono pale (20, 21) est arrêtée et verrouillée longitudinalement de façon à ce que le contrepoids (20d, 21d) soit orienté vers l'avant de l'aérodyne et la pale active (20a, 21a) vers l'arrière de l'aérodyne, sensiblement dans la direction de l'axe de roulis de l'aérodyne, et **en ce que**, pendant le vol vertical, les mono pales (20, 21) tournent en sens inverse à la même vitesse angulaire, à partir d'une position zéro initiale, qui est ladite position arrêtée longitudinalement.

2. Rotor selon la revendication 1 dans lequel la longueur de la pale active (20a), selon son axe longitudinal, est inférieure à 75 % du rayon (R) du rotor et, de préférence, comprise entre 50 % et 70 % du rayon (R).

3. Rotor selon la revendication 1 ou 2, dans lequel ladite partie (20c) porteuse du contrepoids (20d) est sensiblement analogue à la partie (20b) porteuse de la pale active (20a) en ce qu'elle est structurellement rigide et de section transversale (200c) à profil aérodynamique ayant une portance nulle ou quasi nulle quand le rotor est en rotation.

4. Rotor selon la revendication 3, dans lequel la longueur de la partie rigide (20c) porteuse du contrepoids (20d), selon l'axe longitudinal de la pale active (20a), est sensiblement égale à la longueur de la partie rigide (20b) porteuse de la pale active (20a).

5. Rotor selon l'une quelconque des revendications 1 à 4, dans lequel la partie (20c) porteuse du contrepoids (20d) et la partie (20b) porteuse de la pale active (20a) forment une seule et même structure continue et rigide articulée à pivotement autour dudit axe transversal (YY), au niveau dudit axe de rotation (ZZ) du rotor.

6. Rotor selon l'une quelconque des revendications 1 à 4, dans lequel la partie (20c) porteuse du contrepoids (20d) est entraînée en rotation comme la partie (20b) porteuse de la pale active (20a) mais reste fixée perpendiculairement à l'axe (ZZ) de rotation du rotor pendant toutes les phases de vol de l'aérodyne.

7. Rotor selon la revendication 6, dans lequel le contrepoids (20d) conserve un degré de mobilité longitudinale qui est piloté par un dispositif d'équilibrage (100a, 101a, 102a, 104a, 105a) proportionnellement à l'angle de conicité (α) que fait la pale active (20a) avec le plan dit "horizontal" défini par les axes de roulis et tangage de l'aérodyne, de façon à rapprocher le contrepoids (20d) du mât rotor (10) quand l'angle (α) de conicité de la pale (20a, 20b) augmente, de sorte à équilibrer les efforts centrifuges de part et d'autre du mât rotor (10).

8. Rotor selon l'une quelconque des revendications 1 à 5, dans lequel les deux parties rigides (20b,20c), porteuses l'une de la pale active (20a) et l'autre du contrepoids (20d), sont solidaires l'une de l'autre et formées en une seule structure à la fois rigide et profilée aérodynamiquement pour ne pas générer de portance aérodynamique en rotation, tout en étant articulées autour d'un axe transversal (YY) situé exactement au niveau de l'axe (ZZ) de rotation du rotor.

9. Rotor selon la revendication 7, dans lequel un dispositif d'équilibrage mécanique (104a, 105a,, 102a) est, au moins en partie, agencé à l'intérieur de la partie rigide (20c) porteuse du contrepoids (20d), de façon à rapprocher ledit contrepoids (20d) de l'axe (ZZ) de rotation du rotor, quand l'angle de conicité (α) que fait la pale active (20a) avec le plan dit "horizontal" augmente, de façon à équilibrer les forces centrifuges quelle que soit la position de la pale active (20a).

10. Rotor selon l'une quelconque des revendications 1 à 9, dans lequel le rotor est entraîné en rotation par un dispositif d'entraînement (60,61,62,63) masqué à l'intérieur de la partie rigide (20c) porteuse du contrepoids (20d), ledit dispositif d'entraînement autorisant des mouvements de traînée en rotation autour de l'axe de rotation (ZZ) du rotor, pour amortir les variations des forces de traînée de la pale active (20a), ledit dispositif d'entraînement comportant un système de butée d'entraînement amortie (62).

11. Rotor selon l'une quelconque des revendications 1 à 10, dans lequel le pas angulaire ou « angle d'attaque » de la pale active (20a) est piloté en incidence par un système d'arbre (51) longitudinal, retenu et monté rotatif sur lui-même autour de son axe par des roulements et butées (501,502,503), ledit arbre (51) traversant la partie rigide (20b) porteuse de la pale active (20a) et étant solidaire en rotation, par son extrémité radiale externe par rapport à l'axe de rotation (ZZ) du rotor, du pied de ladite pale active (20a), et piloté par une biellette (50) de commande de pas reliée par un levier de pas (52) à l'extrémité radiale interne dudit arbre (51).

12. Rotor selon l'une quelconque des revendications 1 à 11, dans lequel le pas angulaire ou "angle d'attaque" de la pale active (20a) est fixe et optimisé pour offrir la portance maximale à la vitesse de rotation nominale du rotor.

13. Rotor selon l'une quelconque des revendications 1 à 12, dans lequel le pas des pales actives (20a, 21a) des mono pales (20, 21) est réglé uniquement collectivement, pour l'équipement d'un aérodyne (1) dont les mouvements de roulis et de tangage sont pilotés par des systèmes de stabilisation (4a, 4b, 4c) placés, de préférence, en bout d'ailes (1a) et/ou aux extrémités du fuselage (1c).

14. Rotor selon l'une quelconque des revendications 1 à 13, dans lequel une chaîne d'entraînement motorisée et de mise en rotation du rotor à la fin d'un vol de croisière comporte, d'une part, un moteur principal thermique (70), du type moteur à combustion interne à 4 ou 2 temps ou turbine à gaz, entraînant un arbre de transmission (71) de la puissance motrice, par l'intermédiaire d'un embrayage (70a) et d'une roue libre (70b), et une boîte de transmission (72) reliée au mât rotor (10a-10b) pour assurer le vol vertical, et, d'autre part, un frein (710) sur l'arbre (71) de transmission de puissance, un moteur secondaire (73), de préférence électrique, couplé par un embrayage (73a) et une roue libre (73b) à une transmission de puissance (73c) en prise avec l'arbre (71) de transmission, en aval du frein (710), pour arrêter et positionner longitudinalement les mono pales (20, 21) du rotor et servir à la mise en rotation du rotor.

15. Rotor selon la revendication 14, dans lequel une chaîne d'entraînement motorisée secondaire, de faible puissance, par exemple de 10% de la puissance principale, comprend un moteur auxiliaire (30) raccordable, par au moins un embrayage (30a, 31a) et une roue libre (30b, 31b), audit arbre (71) de transmission de puissance, et est débrayable et apte à être utilisée dans toutes les phases transitoires de vol ainsi qu'en situation d'avarie du moteur principal (70), une hélice (3) propulsive ou tractive étant apte à être entraînée en vol de croisière par le moteur principal (70) et, en secours, par le moteur auxiliaire (30).

16. Rotor selon l'une quelconque des revendications 1 à 15, dans lequel lesdites parties rigides (20b, 20c) porteuses respectivement de la pale active (20a) et du contrepoids (20d) sont, au moins pour l'une d'entre elles, et de préférence pour les deux, profilées de façon à offrir une résistance aérodynamique différente selon l'orientation du vent relatif, avec un profil de type elliptique sur le bord d'attaque (200b, 200c) et, de préférence, un profil « en creux » sur le bord de fuite (201b, 201c), chaque profil ayant une orientation inverse de l'autre, et inverse d'une partie rigide à l'autre, de façon à ce que, quand l'aérodyne est en vol de croisière, le vent relatif produise sur les deux parties rigides (20b, 20c) un couple d'entraînement du rotor qui tend à faire tourner la pale active (20a) dans le sens qui lui permet de générer de la portance.

17. Rotor selon l'une quelconque des revendications 1 à 16, dans lequel au moins un élément de verrouillage mécanique (80, 90), rétractile, et apte à être masqué dans la structure de l'aérodyne (1), est agencé de façon à venir verrouiller mécaniquement, pendant un vol de croisière, le rotor (20, 21) en venant s'appuyer sur au moins une protubérance (810a, 810b) agencée sur la partie rigide (20b, 21b) porteuse d'une pale active (20a, 20b) et/ou sur le contrepoids (20d, 21d) correspondant ou la partie rigide (20c, 21c) porteuse dudit contrepoids (20d, 21d).

18. Rotor selon l'une quelconque des revendications 1 à 17, dans lequel au moins un dispositif de verrouillage mécanique (85b, 86) de la partie rigide (21b) porteuse de la pale active (21a) est prévu, ledit dispositif de verrouillage étant solidaire, d'une part, du mât rotor (10) et, d'autre part, comportant un élément de verrouillage (85b) engageable dans une partie femelle (86) solidaire de la partie rigide (21b) porteuse de la pale active (21a), et supportant une masselotte (85a) en étant sollicité par au moins un ressort (85d), le dispositif étant agencé de telle sorte que la force centrifuge, qui s'exerce sur la masselotte (85a), quand le rotor est en rotation, libère le dispositif de verrouillage, qui verrouille la mono pale (21) correspondante en position horizontale quand le rotor est à l'arrêt.

19. Rotor selon l'une quelconque des revendications 1 à 18, dans lequel ledit contrepoids (21d) est placé à l'extrémité d'un élément prolongateur (21e) de la partie rigide (21c) porteuse du contrepoids (21d), ledit élément prolongateur (21e) ayant un profil soit cylindrique et sensiblement circulaire, soit ayant un profil ovale orienté pour réduire la résistance aérodynamique quand le rotor est en rotation et qu'un flux d'air vertical important est généré par la pale active (21a), soit étant entouré d'un carénage profilé aérodynamiquement et libre en rotation de façon à s'orienter pour réduire la résistance aérodynamique quelle que soit la direction du flux d'air.

20. Rotor selon l'une quelconque des revendications 1 à 19, dans lequel l'entraînement du rotor en rotation pendant le vol vertical est obtenu en éjectant de l'air comprimé (B), de préférence au niveau du contrepoids (21d), avantageusement porté par un élément prolongateur (21e) de la partie rigide (21c) porteuse du contrepoids (21d), la distance r qui sépare le point moyen d'éjection de l'air à l'axe rotor (10) étant telle que le rapport r/R soit compris entre 55 % et 85 %, R étant le rayon du rotor, et/ou au niveau du bout de la pale active (20a).

21. Rotor selon la revendication 20, dans lequel une boîte mécanique (70c) de synchronisation et de redémarrage du rotor est associée à un frein (710) et à au moins un moteur électrique (73) avec son système de transmission (71, 73a, 73b, 73c).

22. Rotor selon l'une quelconque des revendications 1 à 21, dans lequel le bout de la pale active (21a) est équipé d'un dispositif d'orientation à dérive (221a) relevable par pivotement autour de l'axe longitudinal de la pale active (20a), tel que, quand le rotor n'est plus entraîné en rotation, ladite dérive (221a) est relevée et soumise à l'effet du vent relatif, de sorte que la mono pale (21a) correspondante est orientée sensiblement dans la direction de l'axe de roulis (XX) de l'aérodyne (1).

23. Rotor selon l'une quelconque des revendications 1 à 22, dans lequel au moins une mono pale comporte deux pales actives (20a, 21a) portées par la même partie rigide (20b) et écartées l'une de l'autre en V d'un angle au moins égal à 30°, sensiblement dans le plan du disque rotor correspondant.

24. Aérodyne du type hybride, **caractérisé en ce qu'**il est équipé d'un rotor (2 ; 20, 21) selon l'une quelconque des revendications 1 à 23, pour le vol vertical, et d'une voilure fixe (1a, 1b), de préférence une voilure de type « canard » ou des ailes de type « tandem », supportée par un fuselage (1c), et équipé de systèmes (4a, 4b, 4c) de stabilisation en bout d'ailes (1a) et/ou en extrémité(s) de fuselage (1c), pour contrôler les mouvements de roulis et de tangage de l'aérodyne (1), ainsi qu'au moins une hélice (3), de préférence propulsive, pour propulser l'aérodyne (1) pendant son vol de croisière.

25. Aérodyne selon la revendication 24, **caractérisé en ce que** les systèmes (4a, 4b, 4c) de stabilisation en bout d'ailes (1b) et/ou en extrémité de fuselage (1c), pour contrôler les mouvements de roulis et de tangage de l'aérodyne (1), sont réalisés sensiblement de la même façon que le rotor principal de sustentation en vol vertical, mais à une échelle plus petite, correspondant à la fonction desdits systèmes (4a, 4b, 4c) de stabilisation, et avec au moins une mono pale (20, 21) avec contrepoids (20d, 21d).

## Patentansprüche

1. Rotor für ein strömungsgetragenes Hybridluftfahrzeug, mit einem feststehenden Flügel und einem sich drehenden Flügel, der geeignet ist, im Reiseflug des strömungsgetragenen Luftfahrzeugs immobilisiert zu werden, wobei der Rotor geeignet ist, durch seine Drehung während einer vertikalen Flugphase den Auftrieb zu erzeugen und während einer Reiseflugphase immobilisiert und in Längsrichtung gelagert zu werden, wobei der Rotor der Art ist, die mindestens ein Einzelblatt (20) mit einem Gegengewicht (20d) und einen Rotormast (10) umfasst, wobei das genannte Einzelblatt umfasst:
- ein aktives Blatt (20a), das den Auftrieb des Rotors während seiner Drehung erzeugt;
- einen ersten Abschnitt (20b), der das genannte aktive Blatt (20a) trägt und die Verbindung des aktiven Blattes (20a) mit dem Rotormast (10) bildet; und
- einen zweiten Abschnitt (20c), der das genannte Gegengewicht (20d) trägt und die Verbindung des Gegengewichts (20d) mit dem genannten Rotormast (10) bildet,
- wobei die Länge des aktiven Blattes (20a) gemäß seiner Spannweite kleiner als der Radius R des Rotors ist;
- wobei der genannte das aktive Blatt (20a) tragende Abschnitt (20b) ein strukturell steifer Abschnitt ist, insbesondere gegenüber Biegung und Torsion;
- wobei der genannte das aktive Blatt (20a) tragende Abschnitt (20b) einen Querschnitt (200b) mit einem aerodynamischen Profil aufweist, das einen Nullauftrieb oder Quasi-Nullauftrieb hat, wenn sich der Rotor dreht; und
- wobei die Einheit, die aus dem aktiven Blatt (20a) und dem steifen, das aktive Blatt (20a) tragenden Abschnitt (20b) gebildet ist, um eine Querachse (YY) angelenkt ist, die senkrecht zur Rotationsachse (ZZ) des Rotors ist, im Wesentlichen im Bereich der genannten Rotationsachse (ZZ) des Rotormastes (10), sowie zur Längsachse des genannten aktiven Blattes (20a) und des genannten steifen, das aktive Blatt (20a) tragenden Abschnitts (20b), und die genannte Rotationsachse (ZZ) schneidet, **dadurch gekennzeichnet, dass** der Rotor mindestens zwei Einzelblätter (20, 21) umfasst, die im Wesentlichen identisch sind und sich in entgegengesetzte Richtungen drehen, jeweils um jeweils eine der Rotationsachsen, die in Längsrichtung auf der Rollachse (XX) des strömungsgetragenen Luftfahrzeugs beabstandet sind, oder gegenläufig um eine selbe Rotationsachse (ZZ) des Rotormastes (10),
dass während des Reiseflugs jedes Einzelblatt (20, 21) gestoppt und in Längsrichtung derart verriegelt wird, dass das Gegengewicht (20d, 21d) in Richtung des Vorderteils des strömungsgetragenen Luftfahrzeugs und das aktive Blatt (20a, 21a) in Richtung des Hecks des strömungsgetragenen Luftfahrzeugs ausgerichtet ist, im Wesentlichen in der Richtung der Rollachse des strömungsgetragenen Luftfahrzeugs, und
dass sich während des vertikalen Flugs die Einzelblätter (20, 21) in entgegengesetzte Richtung mit der gleichen Winkelgeschwindigkeit ab einer anfänglichen Nullposition drehen, welche die in Längsrichtung gestoppte Position ist.

2. Rotor nach Anspruch 1, bei dem die Länge des aktiven Blattes (20a) gemäß seiner Längsachse kleiner als 75 % des Radius (R) des Rotors ist und vorzugsweise zwischen 50 % und 70 % des Radius (R) beträgt.

3. Rotor nach Anspruch 1 oder 2, bei dem der genannte das Gegengewicht (20d) tragende Abschnitt (20c) im Wesentlichen analog zu dem das aktive Blatt (20a) tragenden Abschnitt (20b) ist, indem er strukturell steif ist und einen Querschnitt (200c) mit einem aerodynamischen Profil hat, das einen Nullauftrieb oder einen Quasi-Nullauftrieb hat, wenn sich der Rotor dreht.

4. Rotor nach Anspruch 3, bei dem die Länge des steifen, das Gegengewicht (20d) tragenden Abschnitts (20c) gemäß der Längsachse des aktiven Blattes (20a) im Wesentlichen gleich der Länge des steifen, das aktive Blatt (20a) tragenden Abschnitts (20b) ist.

5. Rotor nach einem der Ansprüche 1 bis 4, bei dem der das Gegengewicht (20d) tragende Abschnitt (20c) und der das aktive Blatt (20a) tragende Abschnitt (20b) ein und dieselbe durchgehende und steife Struktur bilden, die schwenkbar um die genannte Querachse (YY) im Bereich der genannten Rotationsachse (ZZ) des Rotors angelenkt ist.

6. Rotor nach einem der Ansprüche 1 bis 4, bei dem der das Gegengewicht (20d) tragende Abschnitt (20c) wie der das aktive Blatt (20a) tragende Abschnitt (20b) in Drehung angetrieben wird, jedoch senkrecht zur Rotationsachse (ZZ) des Rotors während aller Flugphasen des strömungsgetragenen Luftfahrzeugs fixiert bleibt.

7. Rotor nach Anspruch 6, bei dem das Gegengewicht (20d) einen Längsmobilitätsgrad beibehält, der von einer Ausgleichsvorrichtung (100a, 101a, 102a, 104a, 105a) proportional zum Konuswinkel (α) gesteuert wird, den das aktive Blatt (20a) mit der sogenannten "horizontalen" Ebene einschließt, die von den Roll- und Nickachsen des strömungsgetragenen Luftfahrzeugs definiert wird, derart, dass das Gegengewicht (20d) an den Rotormast (10) angenähert wird, wenn der Konuswinkel (α) des Blattes (20a, 20b) zunimmt, so dass die Zentrifugalkräfte zu beiden Seiten des Rotormastes (10) ausgeglichen werden.

8. Rotor nach einem der Ansprüche 1 bis 5, bei dem die beiden steifen Abschnitte (20b, 20c), von denen einer das aktive Blatt (20a) und der andere das Gegengewicht (20) trägt, fest miteinander verbunden und zu einer einzigen Struktur ausgebildet sind, die sowohl steif ist als auch ein aerodynamisches Profil hat, um keinen aerodynamischen Auftrieb bei Drehung zu erzeugen, während sie um eine Querachse (YY) angelenkt sind, die sich exakt im Bereich der Rotationsachse (ZZ) des Rotors befindet.

9. Rotor nach Anspruch 7, bei dem eine mechanische Ausgleichsvorrichtung (104a, 105a, 102a) zumindest teilweise im Inneren des steifen, das Gegengewicht (20d) tragenden Abschnitts (20c) angeordnet ist, derart, dass das genannte Gegengewicht (20d) an die Rotationsachse (ZZ) des Rotors angenähert wird, wenn der Konuswinkel (α), den das aktive Blatt (20a) mit der sogenannten "horizontalen" Ebene einschließt, zunimmt, derart, dass die Zentrifugalkräfte unabhängig von der Position des aktiven Blattes (20a) ausgeglichen werden.

10. Rotor nach einem der Ansprüche 1 bis 9, bei dem der Rotor von einer Antriebsvorrichtung (60, 61, 62, 63) in Drehung angetrieben wird, die im Inneren des steifen, das Gegengewicht (20d) tragenden Abschnitts (20c) verborgen ist, wobei die genannte Antriebsvorrichtung Schwenkbewegungen in Drehung um die Rotationsachse (ZZ) des Rotors gestattet, um die Schwankungen der Luftwiderstandskräfte des aktiven Blattes (20a) zu dämpfen, wobei die genannte Antriebsvorrichtung ein gedämpftes Antriebsanschlagssystem umfasst.

11. Rotor nach einem der Ansprüche 1 bis 10, bei dem der Neigungswinkel oder "Anstellwinkel" des aktiven Blattes (20a) von einem Längswellensystem (51) neigungsgesteuert wird, das durch Lager und Anschläge (501, 502, 503) gehalten und um sich selbst um seine Achse drehbar gelagert ist, wobei die genannte Welle (51) den steifen, das aktive Blatt (20a) tragenden Abschnitt (20b) durchsetzt und über sein äußeres radiales Ende in Bezug auf die Rotationsachse (ZZ) des Rotors mit dem Fuß des genannten aktiven Blattes (20a) drehfest verbunden ist, und von einer Pitchsteuerstange (50) gesteuert wird, die über einen Pitchhebel (52) mit dem inneren radialen Ende der genannten Welle (51) verbunden ist.

12. Rotor nach einem der Ansprüche 1 bis 11, bei dem der Neigungswinkel oder "Anstellwinkel" des aktiven Blattes (20a) fest und optimiert ist, um den maximalen Auftrieb bei der nominalen Drehgeschwindigkeit des Rotors zu bieten.

13. Rotor nach einem der Ansprüche 1 bis 12, bei dem die Neigung der aktiven Blätter (20a, 21a) der Einzelblätter (20, 21) nur gemeinsam geregelt wird, für die Ausrüstung eines strömungsgetragenen Luftfahrzeugs (1), dessen Roll- und Nickbewegungen von Stabilisierungssystemen (4a, 4b, 4c) gesteuert werden, die vorzugsweise an der Spitze der Flügel (1a) und/oder den Enden des Rumpfes (1c) platziert sind.

14. Rotor nach einem der Ansprüche 1 bis 13, bei dem eine motorisierte Antriebskette zur Drehung des Rotors am Ende eines Reisefluges einerseits eine Hauptwärmekraftmaschine (70) nach Art eines 4-Takt- oder 2-Takt-Verbrennungsmotors oder einer Gasturbine umfasst, die eine Antriebswelle (71) zur Übertragung der Motorleistung über eine Kupplung (70a) und einen Freilauf (70b) antreibt, und ein Übersetzungsgetriebe (72), das mit dem Rotormast (10a-10b) verbunden ist, um den vertikalen Flug sicherzustellen, sowie anderseits eine Bremse (710) an der Leistungsübertragungswelle (71), einen Hilfsmotor (73), vorzugsweise einen Elektromotor, der über eine Kupplung (73a) und einen Freilauf (73b) mit einer Leistungsübertragung (73c), die mit der Übertragungswelle (71) in Eingriff steht, gekoppelt ist, stromabwärts der Bremse (710), um die Einzelblätter (20, 21) des Rotors zu stoppen und in Längsrichtung zu positionieren und um den Rotor in Drehung zu versetzen.

15. Rotor nach Anspruch 14, bei dem eine sekundäre motorisierte Antriebskette mit geringer Leistung, beispielsweise 10% der Hauptleistung, einen Hilfsmotor (30) umfasst, der über mindestens eine Kupplung (30a, 31a) und einen Freilauf (30b, 31b) mit der genannten Leistungsübertragungswelle (71) verbindbar ist, und ausrückbar und geeignet ist, in allen Flugübergangsphasen sowie in einer Störungssituation des Hauptmotors (70) verwendet zu werden, wobei ein Druck- oder Zugpropeller geeignet ist, im Reiseflug von dem Hauptmotor (70) und im Notfall von dem Hilfsmotor (30) angetrieben zu werden.

16. Rotor nach einem der Ansprüche 1 bis 15, bei dem zumindest ein Abschnitt der genannten steifen, das aktive Blatt (20a) bzw. das Gegengewicht (20d) tragenden Abschnitte (20b, 20c) und vorzugsweise beide Abschnitte ein solches Profil haben, dass sie je nach Ausrichtung des relativen Windes einen anderen Luftwiderstand bieten, mit einem Profil elliptischer Art an der Anströmkante (200b, 200c) und vorzugsweise einem "Hohl"-Profil an der Hinterkante (201b, 201c), wobei jedes Profil eine zur anderen umgekehrte Ausrichtung hat, und umgekehrt von einem steifen Abschnitt zum anderen, derart, dass, wenn das strömungsgetragene Luftfahrzeug im Reiseflug ist, der relative Wind an den beiden steifen Abschnitten (20b, 20c) ein Antriebsmoment des Rotors erzeugt, das dazu neigt, das aktive Blatt (20a) in die Richtung zu drehen, die ihm ermöglicht, den Auftrieb zu erzeugen.

17. Rotor nach einem der Ansprüche 1 bis 16, bei dem mindestens ein mechanisches Verriegelungselement (80, 90), das einziehbar und geeignet ist, in der Struktur des strömungsgetragenen Luftfahrzeugs (1) verborgen zu werden, derart ausgebildet ist, den Rotor (20, 21) während eines Reisefluges mechanisch zu verriegeln, indem es sich an mindestens einem Vorsprung (810a, 810b) anlegen wird, der an dem steifen, das aktive Blatt (20a, 20b) tragenden Abschnitt (20b, 21b) und/oder an dem entsprechenden Gegengewicht (20d, 21d) oder dem steifen, das genannte Gegengewicht (20d, 21d) tragenden Abschnitt (20c, 21c) angeordnet ist.

18. Rotor nach einem der Ansprüche 1 bis 17, bei dem mindestens eine mechanische Verriegelungsvorrichtung (85b, 86) zur Verriegelung des steifen, das aktive Blatt (21a) tragenden Abschnitts (21b) vorgesehen ist, wobei die genannte Verriegelungsvorrichtung einerseits fest mit dem Rotormast (10) verbunden ist und andererseits ein Verriegelungselement (85b) umfasst, das mit einem weiblichen Teil (86) in Eingriff bringbar ist, das fest mit dem steifen, das aktive Blatt (21a) tragenden Abschnitt (21b) verbunden ist, und ein Fliehgewicht (85a) trägt und dabei durch mindestens eine Feder (85d) vorgespannt ist, wobei die Vorrichtung derart ausgebildet ist, dass die Zentrifugalkraft, die auf das Fliehgewicht (85a) ausgeübt wird, wenn sich der Rotor dreht, die Verriegelungsvorrichtung löst, die das entsprechende Einzelblatt (21) in horizontaler Position verriegelt, wenn der Rotor stillsteht.

19. Rotor nach einem der Ansprüche 1 bis 18, bei dem das genannte Gegengewicht (21d) am Ende eines Verlängerungselements (21e) des steifen, das Gegengewicht (21d) tragenden Abschnitts (21c) platziert ist, wobei das genannte Verlängerungselement (21e) ein Profil hat, das entweder zylindrisch und im Wesentlichen kreisförmig ist, oder ein ovales Profil hat, das ausgerichtet ist, um den Luftwiderstand zu verringern, wenn sich der Rotor dreht und ein großer vertikaler Luftstrom von dem aktiven Blatt (21a) erzeugt wird, oder von einer Verkleidung mit aerodynamischem Profil umgeben ist, die sich frei dreht, um sich so auszurichten, dass der Luftwiderstand unabhängig von der Richtung des Luftstroms verringert wird.

20. Rotor nach einem der Ansprüche 1 bis 19, bei dem der Antrieb des Rotors in Drehung während des vertikalen Flugs dadurch erreicht wird, dass Druckluft (B) vorzugsweise im Bereich des Gegengewichts (21d), das vorteilhafterweise von einem Verlängerungselement (21e) des steifen, das Gegengewicht (21d) tragenden Abschnitts (21c) getragen wird, ausgestoßen wird, wobei der Abstand r, der den mittleren Luftausstoßpunkt von der Rotorachse (10) trennt, derart ist, dass das Verhältnis von r/R zwischen 55 % und 85 % liegt, wobei R der Radius des Rotors ist, und/oder im Bereich des Endes des aktiven Blattes (20a).

21. Rotor nach Anspruch 20, bei dem ein mechanisches Getriebe (70c) zur Synchronisation und Wiedereinschaltung des Rotors mit einer Bremse (710) und mit mindestens einem Elektromotor (73) zusammen mit seinem Getriebesystem (71, 73a, 73b, 73c) verbunden ist.

22. Rotor nach einem der Ansprüche 1 bis 21, bei dem das Ende des aktiven Blattes (21a) mit einer Seitenflossenausrichtungsvorrichtung (221a) ausgestattet ist, die durch Schwenken um die Längsachse des aktiven Blattes (20a) hochklappbar ist, so dass, wenn der Rotor nicht mehr in Drehung angetrieben wird, die genannte Seitenflosse (221a) hochgeklappt und der Wirkung des relativen Windes ausgesetzt wird, so dass das entsprechende Einzelblatt (21a) im Wesentlichen in Richtung der Rollachse (XX) des strömungsgetragenen Luftfahrzeugs (1) ausgerichtet ist.

23. Rotor nach einem der Ansprüche 1 bis 22, bei dem mindestens ein Einzelblatt zwei aktive Blätter (20a, 21a) umfasst, die von demselben steifen Abschnitt (20b) getragen werden und zueinander V-förmig um einen Winkel von mindestens gleich 30° beabstandet sind, im Wesentlichen in einer Ebene der entsprechenden Rotorscheibe.

24. Hybridartiges strömungsgetragenes Luftfahrzeug, **dadurch gekennzeichnet, dass** es mit einem Rotor (2; 20, 21) nach einem der Ansprüche 1 bis 23 ausgestattet ist, für den vertikalen Flug, und mit einem feststehenden Flügel (1a, 1b), vorzugsweise einem Flügel vom Typ "Entenflügel" oder Flügel vom Typ "Tandem", der von einem Rumpf (1c) getragen wird, sowie mit Stabilisierungssystemen (4a, 4b, 4c) an der Spitze der Flügel (1a) und/oder an dem/den Ende(n) des Rumpfes (1c) ausgestattet ist, um die Roll- und Nickbewegungen des strömungsgetragenen Luftfahrzeugs (1) zu steuern, sowie mindestens einem Propeller (3), vorzugsweise einem Druckpropeller, um das strömungsgetragene Luftfahrzeug (1) während seines Reisefluges anzutreiben.

25. Strömungsgetragenes Luftfahrzeug nach Anspruch 24, **dadurch gekennzeichnet, dass** die Stabilisierungssysteme (4a, 4b, 4c) an der Spitze der Flügel (1b) und/oder am Ende des Rumpfes (1c) zum Steuern der Roll- und Nickbewegungen des strömungsgetragenen Luftfahrzeugs (1) im Wesentlichen auf dieselbe Weise wie der Hauptauftriebsrotor für den vertikalen Flug umgesetzt sind, jedoch mit einem kleineren Maßstab, entsprechend der Funktion der genannten Stabilisierungssysteme (4a, 4b, 4c), und mit mindestens einem Einzelblatt (20, 21) mit Gegengewicht (20d, 21d).

## Claims

1. A rotor for a hybrid aerodyne having a fixed wing and a rotary wing suitable for being held stationary in cruising flight of the aerodyne, the rotor being suitable for producing lift by rotating during a stage of vertical flight and for being held stationary and stored longitudinally during a stage of cruising flight, the rotor being of the type comprising at least one single-blade (20) with a counterweight (20d), said single-blade comprising:
- an active blade (20a) that generates the lift of the rotor during rotation;
- a first portion (20b) that carries said active blade (20a) and that constitutes the connection between the active blade (20a) and the rotor mast (10); and
- a second portion (20c) that carries said counterweight (20d) and that constitutes the connection between the counterweight (20d) and said rotor mast (10),
the length of the active blade (20a) in its span direction being less than the radius R of the rotor;
said portion (20b) carrying the active blade (20a) being a portion that is structurally rigid, in particular against bending and twisting;
said portion (20b) carrying the active blade (20a) presenting a cross-section (200b) of aerodynamic profile having zero or almost zero lift when the rotor is in rotation; and
the assembly constituted by the active blade (20a) and the rigid portion (20b) carrying the active blade is hinged about a transverse axis (YY) perpendicular to the axis of rotation (ZZ) of the rotor, substantially at said axis of rotation (ZZ) of the rotor mast (10), and the longitudinal axis of said active blade (20a) and of said rigid portion (20b) carrying the active blade intersects said axis of rotation (ZZ);
the rotor being **characterized in that** it comprises at least two substantially identical single-blades (20, 21) rotating in opposite directions, each about a respective one of axes of rotation that are longitudinally spaced apart along the roll axis (XX) of the aerodyne, or that are contrarotating about a common axis of rotation (ZZ) of the rotor mast (10); and
**in that**, during cruising flight, each single-blade (20, 21) is stopped and locked longitudinally in such a manner that the counterweight (20d, 21d) is oriented towards the front of the aerodyne and the active blade (20a, 21a) is oriented towards the rear of the aerodyne, substantially in the direction of the roll axis of the aerodyne, and **in that**, during vertical flight, the single-blades (20, 21) rotate in opposite directions as the same angular speed from an initial zero position, which is said longitudinally stopped position.

2. A rotor according to claim 1, wherein the length of the active blade (20a) along its longitudinal axis is less than 75% of the radius R of the rotor, and preferably lies in the range 50% to 70% of the radius R.

3. A rotor according to claim 1 or claim 2, wherein said portion (20c) carrying the counterweight (20d) is substantially analogous to the portion (20b) carrying the active blade (20a) in that it is structurally rigid and of cross-section (200c) of aerodynamic profile presenting zero or almost zero lift when the rotor is in rotation.

4. A rotor according to claim 3, wherein the length of the rigid portion (20c) carrying the counterweight (20d) along the longitudinal axis of the active blade (20a) is substantially equal to the length of the rigid portion (20b) carrying the active blade (20a).

5. A rotor according to any one of claims 1 to 4, wherein the portion (20c) carrying the counterweight (20d) and the portion (20b) carrying the active blade (20a) form a single continuous and rigid structure pivotally hinged about said transverse axis (YY) at said axis of rotation (ZZ) of the rotor.

6. A rotor according to any one of claims 1 to 4, wherein the portion (20c) carrying the counterweight (20d) is driven in rotation like the portion (20b) carrying the active blade (20a), but remains constantly perpendicular to the axis of rotation (ZZ) of the rotor during all stages of flight of the aerodyne.

7. A rotor according to claim 6, wherein the counterweight (20d) conserves a degree of freedom to move longitudinally under the control of a balancing device (100a, 101a, 102a, 104a, 105a) in proportion to the cone angle (α) made by the active blade (20a) with the so-called "horizontal" plane defined by the roll and pitching axes of the aerodyne, so as to cause the counterweight (20d) to approach the rotor mast (10) when the cone angle (α) of the blade (20a, 20b) increases, so as to balance centrifugal forces on either side of the rotor mast (10).

8. A rotor according to any one of claims 1 to 5, wherein the two rigid portions (20b, 20c), one carrying the active blade (20a) and the other carrying the counterweight (20d), are secured to each other and form a single structure that is both rigid and aerodynamically profiled so as to avoid generating aerodynamic lift in rotation, while also being hinged about a transverse axis (YY) situated exactly at the axis of rotation (ZZ) of the rotor.

9. A rotor according to claim 7, wherein a mechanical balancing device (104a, 105a, 102a) is arranged at least in part inside the rigid portion (20c) carrying the counterweight (20d) so as to cause said counterweight (20d) to move towards the axis of rotation (ZZ) of the rotor when the cone angle (α) made by the active blade (20a) with the so-called "horizontal" plane increases, so as to balance centrifugal forces, regardless of the position of the active blade (20a).

10. A rotor according to any one of claims 1 to 9, wherein the rotor is driven in rotation by a drive device (60, 61, 62, 63) masked inside the rigid portion (20c) carrying the counterweight (20d), said drive device allowing lead/lag movements in rotation about the axis of rotation (ZZ) of the rotor so as to damp variations in the lead/lag forces of the active blade (20a), said drive device including a damped drive abutment system (62).

11. A rotor according to any one of claims 1 to 10, wherein the angular pitch or "blade angle" of the active blade (20a) has an angle of incidence that is controlled by a longitudinal shaft system (51) held and mounted to turn about its own axis by bearings and abutments (501, 502, 503), said shaft (51) passing through the rigid portion (20b) carrying the active blade (20a) and being constrained, at its radially outer end relative to the axis of rotation (ZZ) of the rotor, to move in rotation with the root of said active blade (20a), and being controlled by a pitch control rod (50) connected by a pitch lever (52) to the radially inner end of said shaft (51) .

12. A rotor according to any one of claims 1 to 11, wherein the angular pitch or "blade angle" of the active blade (20a) is constant and optimized to offer maximum lift at the nominal speed of rotation of the rotor.

13. A rotor according to any one of claims 1 to 12, wherein the pitch of the active blades (20a, 21a) of the single-blades (20, 21) is adjusted collectively only, for equipping an aerodyne (1) in which roll and pitching movements are controlled by stabilizer systems (4a, 4b, 4c) that are preferably located at the tips of the wings (1a) and/or at the ends of the fuselage (1c).

14. A rotor according to any one of claims 1 to 13, wherein a motor-driven drive train for rotating the rotor at the end of cruising flight comprises firstly a main fuel-burning engine (70) of the four- or two-stroke piston engine type or of the gas turbine type, driving a drive power transmission shaft (71) via a clutch (70a) and a freewheel (70b), and a transmission gearbox (72) connected to the rotor mast (10a-10b) for providing vertical flight, and secondly a brake (710) on the power transmission shaft (71), a secondary motor (73), preferably an electric motor, coupled by a clutch (73a) and a freewheel (73b) to a power transmission (73c) engaged with the transmission shaft (71) downstream from the brake (710), in order to stop the single-blades (20, 21) of the rotor and position them longitudinally, and also in order to set the rotor into rotation.

15. A rotor according to claim 14, wherein a secondary motor-driven drive train of low power, e.g. 10% of the main power, comprises an auxiliary motor (30) connectable via at least one clutch (30a, 31a) and a freewheel (30b, 31b) to said power transmission shaft (71) and is declutchable and suitable for being used during all transient stages of flight and also in the event of a malfunction of the main engine (70), a pusher or puller propeller (3) being suitable for being driven in cruising flight by the main engine (70), and in an emergency by the auxiliary motor (30).

16. A rotor according to any one of claims 1 to 15, wherein at least one and preferably both of said rigid portions (20b, 20c) respectively carrying the active blade (20a) and the counterweight (20d) is/are profiled in such a manner as to offer different aerodynamic resistances depending on the orientation of the relative airflow, with a profile of elliptical type on the leading edge (200b, 200c), and preferably a "recessed" profile on the trailing edge (201b, 201c), each profile being oriented opposite to the other, and oppositely from one rigid portion to the other, in such a manner that when the aerodyne is in cruising flight, the relative airflow reduces torque on the two rigid portions (20b, 20c) driving the rotor, tending to cause the active blade (20a) to turn in the direction that enables it to generate lift.

17. A rotor according to any one of claims 1 to 16, wherein at least one retractable mechanical locking element (80, 90) that is suitable for being masked in the structure of the aerodyne (1) is arranged in such a manner as to lock the rotor (20, 21) mechanically during cruising flight by bearing against at least one protuberance (810a, 810b) arranged on the rigid portion (20b, 21b) carrying an active blade (20a, 20b) and/or on the corresponding counterweight (20d, 21d) or the rigid portion (20c, 21c) carrying said counterweight (20d, 21d).

18. A rotor according to any one of claims 1 to 17, wherein at least one mechanical locking device (85b, 86) for locking the rigid portion (21b) carrying the active blade (21a) is provided, said locking device being secured firstly to the rotor mast (10) and secondly having a locking element (85b) that is engageable in a female portion (86) secured to the rigid portion (21b) carrying the active blade (21a), and supporting a flyweight (85a) while being subjected to urging from at least one spring (85d), the device being arranged in such a manner that centrifugal force, which acts on the flyweight (85a) when the rotor is rotating, serves to release the locking device that locks the corresponding single-blade (21) in the horizontal position when the rotor is stopped.

19. A rotor according to any one of claims 1 to 18, wherein said counterweight (21d) is placed at the end of an extender element (21e) extending the rigid portion (21c) carrying the counterweight (21d), said extender element (21e) having a profile that is either cylindrical and substantially circular, or else that is oval and oriented so as to reduce aerodynamic resistance when the rotor is rotating and a large vertical air stream is generated by the active blade (21a), or else is surrounded by an aerodynamically profiled fairing that is free to turn so as to become oriented so as to reduce aerodynamic resistance regardless of the direction of the air stream.

20. A rotor according to any one of claims 1 to 19, wherein the rotor is driven in rotation during vertical flight by ejecting compressed air (B), preferably from the counterweight (21d) advantageously carried by an extender element (21e) of the rigid portion (21c) carrying the counterweight (21d), with the distance r between the mean air ejection point from the axis of the rotor (10) being such that the ratio r/R lies in the range 55% to 85%, where R is the radius of the rotor, and/or at the end of the active blade (20a).

21. A rotor according to claim 20, wherein a rotor synchronizing and restarting gearbox (70c) is associated with a brake (710) and with at least one electric motor (73) together with its transmission system (71, 73a, 73b, 73c).

22. A rotor according to any one of claims 1 to 21, wherein the tip of the active blade (21a) is provided with a fin steering device (221a) that can be raised by pivoting about the longitudinal axis of the active blade (20a) such that when the rotor is no longer driven in rotation, said fin (221a) is raised and subjected to the effect of the relative airflow so that the corresponding single-blade (21a) is oriented substantially along the direction of the roll axis (XX) of the aerodyne (1).

23. A rotor according to any one of claims 1 to 22, wherein at least one single-blade has two active blades (20a, 21a) carried by the same rigid portion (20b) and spaced apart from each other in a V-configuration having an angle of at least 30°, lying substantially in the plane of the corresponding rotor disk.

24. A hybrid type aerodyne, **characterized in that** it is provided with a rotor (2; 20, 21) according to any one of claims 1 to 23, for vertical flight, and with a fixed wing (1a, 1b), preferably a wing of the "canard" type or wings of the "tandem" type, supported by a fuselage (1c), and fitted with stabilizer systems (4a, 4b, 4c) at the tips of the wings (1a) and/or at the end(s) of the fuselage (1c) in order to control roll and pitching movements of the aerodyne (1), together with at least one propeller (3), preferably a pusher propeller, for propelling the aerodyne (1) during cruising flight.

25. An aerodyne according to claim 24, **characterized in that** the stabilizer systems (4a, 4b, 4c) at the tips of the wings (1b) and/or at the end of the fuselage (1c) for controlling roll and pitching movements of the aerodyne (1) are made in substantially the same manner as the main vertical flight lift rotor, but on a smaller scale, corresponding to the functions of said stabilizer systems (4a, 4b, 4c), and with at least one single-blade (20, 21) with a counterweight (20d, 21d).
